(19) Europäisches Patentamt
European Patent Office
Office européen des brevets

(11) EP 2 093 699 A1

(12) EUROPEAN PATENT APPLICATION

(43) Date of publication:
26.08.2009 Bulletin 2009/35

(51) Int Cl.:
$G06K\ 9/00^{(2006.01)}$

(21) Application number: 08250571.0

(22) Date of filing: 19.02.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: British Telecommunications Public
Limited Company
London
Greater London EC1A 7AJ (GB)

(72) Inventor: The designation of the inventor has not
yet been filed

(74) Representative: Roberts, Simon Christopher
BT Group Legal
Intellectual Property Department
PP C5A
BT Centre
81 Newgate Street
London EC1A 7AJ (GB)

(54) **Movable object status determination**

(57) Embodiments of the present invention relate to automated methods and systems for determining a degree of presence of a movable object in a physical space. Video images are used to define a region of interest (1305) in the space and partition the region of interest into an array of sub-regions (1310). Then, first and second spatial-temporal visual features are determined, and metrics are computed (1320), (1340), to characterise whether or not each sub-region contains a moving or stationary object. The metrics are used to generate (1350) an indication of the overall degree of presence within the region of interest.

Fig.13.

**Description**

Field of the Invention

The present invention relates to object detection using video images and, in particular, but not exclusively, to determining the status (presence or absence) of movable objects such as, for example, trains at a train station platform.

Background of the Invention

There are generally two approaches to behaviour analysis in computer vision-based dynamic scene analysis and understanding. The first approach is the so-called "object-based" detection and tracking approach, the subjects of which are individual or small group of objects present within the monitoring space, be it a person or a car. In this case, firstly, the multiple moving objects are required to be simultaneously and reliably detected, segmented and tracked against all the odds of scene clutters, illumination changes and static and dynamic occlusions. The set of trajectories thus generated are then subjected to further domain model-based spatial-temporal behaviour analysis such as, for example, Bayesian Net or Hidden Markov Models, to detect any abnormal/normal event or change trends of the scene.
The second approach is the so-called "non-object-centred" approach aiming at (large density) crowd analysis. In contrast with the first approach, the challenges this approach faces are distinctive, since in crowded situations such as normal public spaces, (for example, a high street, an underground platform, a train station forecourt, shopping complexes), automatically tracking dozens or even hundreds of objects reliably and consistently over time is difficult, due to insurmountable occlusions, the unconstrained physical space and uncontrolled and changeable environmental and localised illuminations.
By way of example, some particular difficulties in relation to an underground station platform, which can also be found in general scenes of public spaces in perhaps slightly different forms, include:

- Global and localised lighting changes. When the platform has few or sparsely covered by passengers, there exist strong and varied specular reflections from the polished platform floor on multiple light sources including the rapid changes of the headlights of an approaching train; the rear red lights of a departing train; the lights shed from the inside of carriages when a train stops at the platform as well as the environment lighting of the station.

- Traffic signal changes. The change in colour of the traffic and platform warning signal lights (for drivers and platform staff, respectively) when a train approaches, stops at and leaves the station will affect to a different degree large areas of the scene.

- Severe perspective distortion of the imaging scene: Since the existing video cameras (used in a legacy CCTV management system) are mounted at unfavourable low ceiling position (about 3 meters) above the platform whilst attempting to cover as large a segment of the platform as possible.

Embodiments of aspects of the present invention aim to provide an alternative or improved method and system for crowd congestion analysis.

Summary of the Invention

According to a first aspect, the present invention provides a method of determining a status of a movable object in a physical space by automated processing of a video sequence of the space, the method comprising: determining a region of interest accommodating a pre-determined path of the object in the space; partitioning the region of interest into an array of sub-regions; determining first spatial-temporal visual features within the region of interest and, for one or more sub-regions, computing a metric based on the said features indicating whether or not a said object is moving in the sub-region; determining second spatial-temporal visual features within the region of interest and, for one or more sub-regions, computing a metric based on the said features indicating whether or not a said object is stationary in the sub-region; generating an overall degree of presence for an object in the region of interest on the basis of both moving and stationary metrics.
According to a second aspect, the present invention provides system determining a degree of presence of a movable object in a physical space by automated processing of a video sequence of the space, the system comprising: an imaging device for generating images of a physical space; and a processor, wherein, for a given region of interest in images of the space, the processor is arranged to: partition the region of interest into an array of sub-regions; determine third spatial-temporal visual features within the region of interest and, for one or more sub-regions, computing a metric based on the said features indicating whether or not a said object is moving in the sub-region; determine fourth spatial-temporal visual features within the region of interest and, for one or more sub-regions, computing a metric based on the said features indicating whether or not a said object is stationary in the sub-region; generate an overall degree of presence for an object in the region of interest on the basis of both moving and stationary metrics.

Further features and advantages of the invention will become apparent from the following description of preferred embodiments of the invention, given by way of example only, which is made with reference to the accompanying drawings.

Brief Description of the Drawings

Figure 1 is a block diagram of an exemplary application / service system architecture for enacting object detection and crowd analysis according to an embodiment of the present invention;

Figure 2 is a block diagram showing the main components of an analytics engine of a system for crowd analysis;

Figure 3 is a block diagram showing individual component and linkages between the components of the analytics engine of the system;

Figure 4a is an image of an underground train platform and Figure 4b is the same image with an overlaid region of interest;

Figure 5 is a schematic diagram illustrating a homographic mapping of the kind used to map a ground plane to a video image plane according to embodiments of the present invention;

Figure 6a illustrates a partitioned region of interest on a ground plane - with relatively small, uniform sub-regions - and Figure 6b illustrates the same region of interest mapped onto a video plane;

Figure 7a illustrates a partitioned region of interest on a ground plane - with relatively large, uniform sub-regions - and Figure 7b illustrates the same region of interest mapped onto a video plane;

Figure 8 is a flow diagram showing an exemplary process for sizing and re-sizing sub-regions in a region of interest;

Figure 9a exemplifies a non-uniformly partitioned region of interest on a ground plane and Figure 9b illustrates the same region of interest mapped onto a video plane according to embodiments of the present invention;

Figures 10a, 10b and 10c show, respectively, an image of an exemplary train platform, a detected foreground image indicating areas of meaningful movement within the region of interest (not shown) of the same image and the region of interest highlighting dynamic, static and vacant sub-regions;

Figures 11a, 11b and 11c respectively show an image of a moderately well-populated train platform, a region of interest highlighting dynamic, static and vacant sub-regions and a detected pixels mask image highlighting globally congested areas within the same image;

Figures 12a and 12b are images which show one crowded platform scene with (in Figure 12b) and without (in Figure 12a) a highlighted region of interest suitable for detecting a train according to embodiments of the present invention;

Figures 12c and 12d are images which show another crowded platform scene with (in Figure 12d) and without (in Figure 12c) a highlighted region of interest suitable for detecting a train according to embodiments of the present invention;

Figure 13 is a block diagram showing the main components of an analytics engine of a system for train detection;

Figures 14a and 14b illustrate one way of weighting sub-regions for train detection according to embodiments of the present invention;

Figures 15a-15c and 16a-16c are images of two platforms, respectively, in various states of congestion, either with or without a train presence, including a train track region of interest highlighted thereon;

Figure 17 relating to a first timeframe is a graph plotted against time showing both a train detection curve and a passenger crowding curve, and the graph is accompanied by a sequence of platform video snapshot images (A), (B) and (C) taken at different times along the time axis of the graph, wherein the images have overlaid thereupon both a train track and platform region of interest;

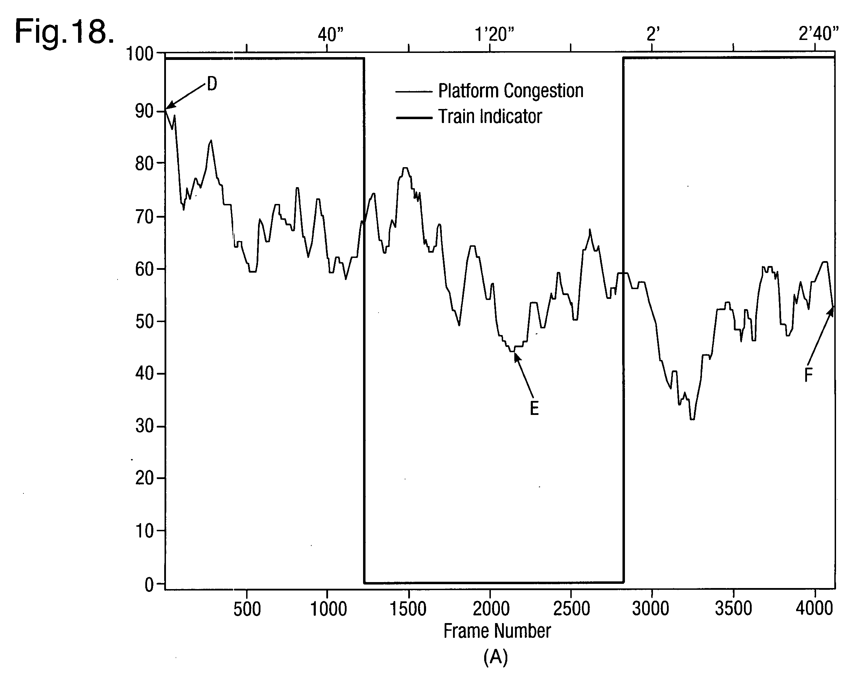

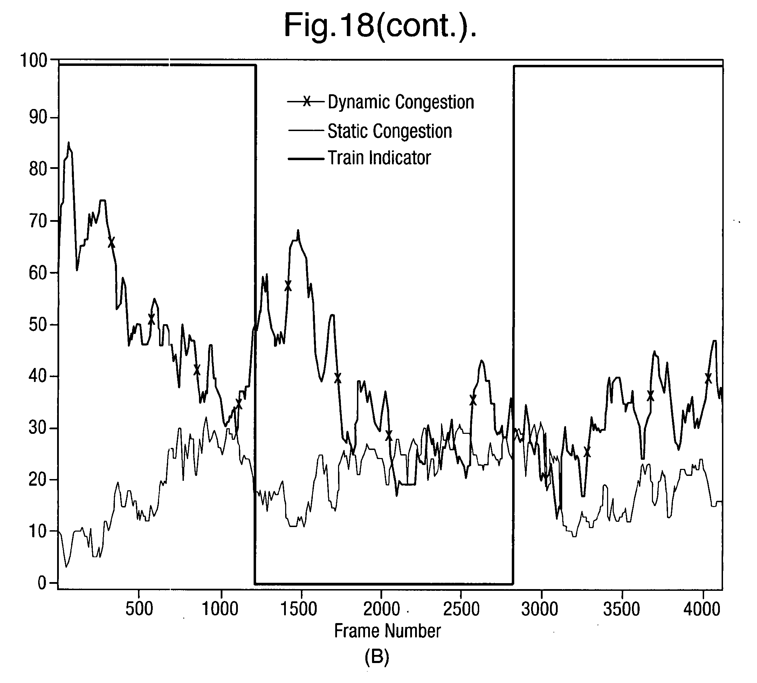

Figure 18a relating to a second timeframe is a graph plotted against time showing both a train detection curve and a passenger crowding curve and Figure 18b is a graph plotted against the same time showing a train detection curve and two passenger crowding curves - one said curve due to dynamic congestion and the other said curve due to static congestion - and the graphs are accompanied by a sequence of platform video snapshot images (D), (E) and (F) taken at different times along the time axis of the graph, wherein the images have overlaid thereupon both a train track and platform region of interest;

Figure 19 relating to a third timeframe is a graph plotted against time showing both a train detection curve and a passenger crowding curve, and the graph is accompanied by a sequence of platform video snapshot images (J), (K) and (L) taken at different times along the time axis of the graph, wherein the images have overlaid thereupon both a train track and platform region of interest; and

Figure 20 relating to a fourth timeframe is a graph plotted against time showing both a train detection curve and a passenger crowding curve, and the graph is accompanied by a sequence of platform video snapshot images (2), (3) and (4) taken at different times along the time axis of the graph, wherein the images have overlaid thereupon both a train track and platform region of interest.

Detailed Description of the Invention

Embodiments of aspects of the present invention provide an effective functional system using video analytics algorithms for automated train presence detection operating on live image sequences captured by surveillance video cameras. Conveniently, the system uses algorithms that are also capable of being used in crowd behaviour analysis. Analysis is performed in real-time in a low-cost, Personal Computer (PC) whilst cameras are monitoring real-world, cluttered and busy operational environments. In particular, the operational setting of interest is urban underground platforms. Against this background, the challenges to face include: diverse, cluttered and changeable environments; sudden changes in illuminations due to a combination of sources (for example, train headlights, traffic signals, carriage illumination when calling at station and spot reflections from polished platform surface); the reuse of existing legacy analogue cameras with unfavourable relatively low mounting positions and near to horizontal orientation angle (causing more severe perspective distortion and object occlusions). The performance has been demonstrated by extensive experiments on real video collections and prolonged live field trials.

Both train detection and crowd analysis procedures will be described hereinafter; starting with crowd analysis and following with train detection. It will be appreciated that the train detection techniques may be applied alone or in combination with crowd analysis, though embodiments described herein combine both.

The analytics PC 105 includes a video analytics engine 115 consisting of real-time video analytic algorithms, which typically execute on the analytics PC in separate threads, with each thread processing one video stream to extract pertinent semantic scene change information, as will be described in more detail below. The analytics PC 105 also includes various user interfaces 120, for example for an operator to specify regions of interest in a monitored scene using standard graphics overlay techniques on captured video images.

The video analytics engine 115 may generally include visual feature extraction functions (for example including global vs. local feature extraction), image change characterisation functions, information fusion functions, density estimation functions and automatic learning functions.

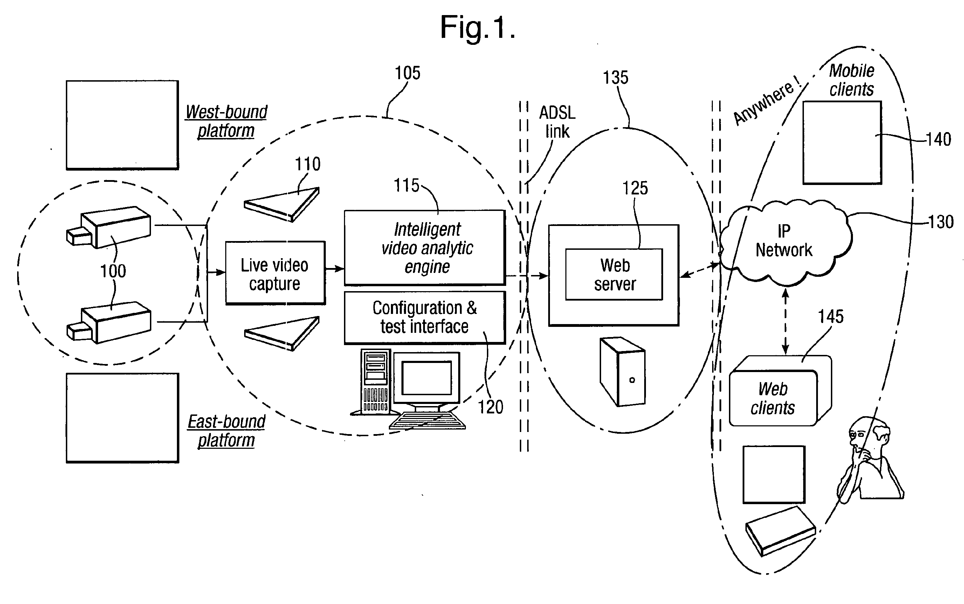

An exemplary output of the video analytics engine 115 from a platform 105 may include both XML data, representing the level of scene congestion and other information such as train presence (arrival / departure time) detection, and snapshot images captured at a regular interval, for example every 10 seconds. According to Figure 1, this output data may be transmitted via an IP network (not shown), for example the Internet, to a remote data warehouse (database) 135 including a web server 125 from which information from many stations can be accessed and visualised by various remote mobile 140 or fixed 145 clients, again, via the Internet 130.

It will be appreciated that each platform may be monitored by one, or more than one, video camera. It is expected that more-precise congestion measurements can be derived by using plural spatially-separated video cameras on one platform; however, it has been established that high quality results can be achieved by using only one video camera and feed per platform and, for this reason, the following examples are based on using only one video feed.

Embodiments of aspects of the present invention perform visual scene "segmentation" based on relevance analysis on (and fusion of) various automatically computable visual cues and their temporal changes, which characterise train and crowd movements and, with regard to crowds, reveal a level of congestion in a defined and/or confined physical space.

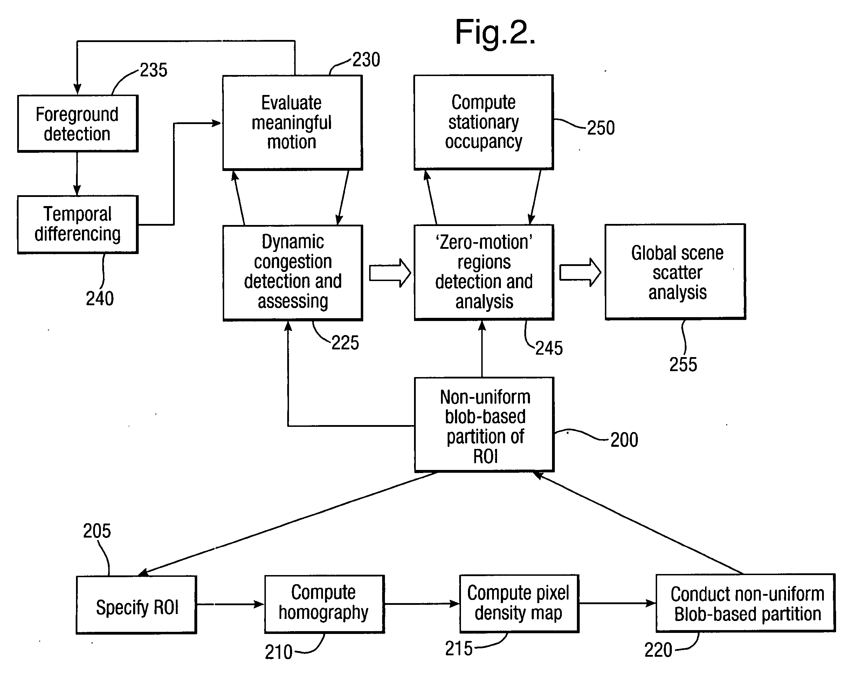

Figure 2 is a block diagram showing four main components of analytics engine 115, and the general processes by which a congestion level is calculated. All components are required for crowd analysis but not all are required for train detection, the components for which are described below in greater detail.

The first component 200 is arranged to specify a region of interest (ROI) of a scene 205; compute the scene geometry (or planar homography between the ground plane and image plane) 210; compute a pixel-wise perspective density map within the ROI 215; and, finally, conduct a non-uniform blob-based partition of the ROI 220, as will be described in detail below. In the present context, a "blob" is a sub-region within a ROI. The output of the first component 200 is used by both a second and a third component. The second component 225, is arranged to evaluate instantaneous changes in visual appearance features due to meaningful motions 230 (of passengers) by way of foreground detection 235 and temporal differencing 240. The third component 245, is arranged to account for stationary occupancy effects 250 when people move slowly or remain almost motionless in the scene, for regions of the ROI that are not deemed to be dynamically congested. It should be noted that, for both the second and third components, all the operations are performed on a blob by blob basis. Finally, the fourth component 255 is arranged to compensate for the bias effect that a sparsely distributed crowd may appear to have the same congestion level as that of a spatially tightly distributed crowd from previous computations, where, in fact, the former is much less congested than that of the latter in 3D world scene. The output of the fourth component is an indication of an overall measure of congestion for the region of interest. All of the functions performed by these modules will be described in further detail hereinafter.

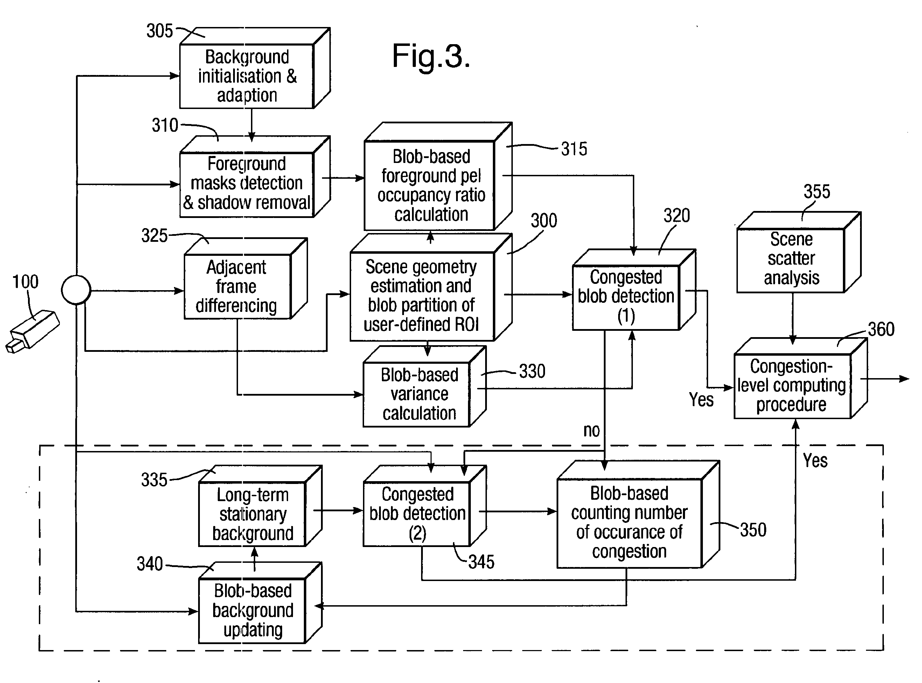

Figure 3 is a block diagram representing a more-detailed breakdown of the internal operations of each of the components and functions in Figure 2, and the concurrent and sequential interactions between them.

According to Figure 3, block 300 is responsible for scene geometry (planar homography) estimation and non-uniform blob-based partitioning of a ROI. The block 300 uses a static image of a video feed from a video camera and specifies a ROI, which is defined as a polygon by an operator via a graphical user interface. Once the ROI has been defined, and an assumption made that the ROI is located on a ground plane in the real world, block 300 computes a plane-to-plane homography (mapping) between the camera image plane and the ground plane. There are various ways to calculate or estimate the homography, for example by marking at least four known points on the ground plane [1] or through a camera self calibration procedure based on a walking person [3] or other moving object. Such calibration can be done off-line and remains the same if the camera's position is fixed. Next, a pixel-wise density map is computed on the basis of the homography, and a non-uniform partition of the ROI into blobs of appropriate size is automatically carried out. The process of non-uniform partitioning is described below in detail. A weight (or 'congestion contributor') is assigned to each blob. The weight may be collected from the density values of the pixels falling within the blob, which accounts for the perspective distortion of the blob in the camera's view. Alternatively, it can be computed according to the proportional change relative to the size of a uniform blob partition of the ROI. The blob partitions thus generated are used subsequently for blob-based scene congestion analysis throughout the whole system.

Congestion analysis according to the present embodiment comprises three distinct operations. A first analysis operation comprises dynamic congestion detection and assessment, which itself comprises two distinct procedures, for detecting and assessing scene changes due to local motion activities that contribute to a congestion rating or metric. A second analysis operation comprises static congestion detection and assessment and third analysis operation comprises a global scene scatter analysis. The analysis operations will now be described in more detail with reference to Figure 3.

Dynamic Congestion Detection and Assessment

Firstly, in order to detect instantaneous scene dynamics, in block 305 a short-term responsive background (STRB) model, in the form of a pixel-wise Mixture of Gaussian (MoG) model in RGB colour space, is created from an initial segment of live video input from the video camera. This is used to identify foreground pixels in current video frames that undergo certain meaningful motions, which are then used to identify blobs containing dynamic moving objects (in this case passengers). Thereafter, the parameters of the model are updated by the block 305 to reflect short term environmental changes. More particularly, foreground (moving) pixels, are first detected by a background subtraction procedure in block involving comparing, on a pixel-wise basis, a current colour video frame with the STRB. The pixels then undergo further processing steps, for example including speckle noise detection, shadow and highlight removal, and morphological filtering, by block 310 thereby resulting in reliable foreground region detection [2], [4]. For each partition blob within the ROI, an occupancy ratio of foreground pixels relative to the blob area is computed in a block 315, which occupancy ratio is then used by block 320 to decide on the blob's dynamic congestion candidacy.

Secondly, in order to cope with likely sudden uniform or global lighting changes in the scene, the intensity differencing of two consecutive frames is computed in block 325, and, for a given blob, the variance of differenced pixels inside it is computed in block 330, which is then used to confirm the blob's dynamic congestion status: namely, 'yes' with its weighted congestion contribution or 'no' with zero congestion contribution by block 320.

Static Congestion Detection and Assessment

Due to the intrinsic unpredictability of a dynamic scene, so-called "zero-motion" objects can exist, which undergo little or no motion over a relatively long period of time. In the case of an underground station scenario, for example, "zero-motion" objects can describe individuals or groups of people who enter the platform and then stay in the same standing or seated position whilst waiting for the train to arrive.

In order to detect such zero-motion objects, a long-term stationary background (LTSB) model that reflects an almost passenger-free environment of the scene is generated by a block 335. This model is typically created initially (during a time when no passengers are present) and subsequently maintained, or updated selectively, on a blob by blob basis, by a block 340. When a blob is not detected as a congested blob in the course of the dynamic analysis above, a comparison of the blob in a current video frame is made with the corresponding blob in the LTSB model, by a block 345, using a selected visual feature representation to decide on the blob's static congestion candidacy. In addition, a further analysis, by the same block 345, on the variance of the differenced pixels is used to confirm the blob's static congestion status with its weighted congestion contribution. Finally, the maintenance of the LTSB model in the ROI is performed on a blob by blob basis by the block 350. In general, if a blob, after the above cascaded processing steps, is not considered to be congested for a number of frames, then it is updated using a low-pass filter in a known way.

Global scene scatter analysis

In contrast with the above blob-based (localised) scene analysis, this operation, carried out by a block 355, is a global scene characterisation measure introduced to differentiate between different crowd distributions that tend to occur in the scene. In particular, the analysis can distinguish between a crowd that is tightly concentrated and a crowd that is largely scattered over the ROI. It has been shown that, while not essential, this analysis step is able to compensate for certain biases of the previous two operations, as will be described in more detail below.

A final step according to Figure 3 is to generate an overall congestion measure, in a block 360. This measure has many applications, for example, it can be used for statistical analysis of traffic movements in the network of train stations, or to control safety systems which monitor and control whether or not more passengers should be permitted to enter a crowded platform.

The algorithms applied by the analytics engine 115 will now be described in further detail.

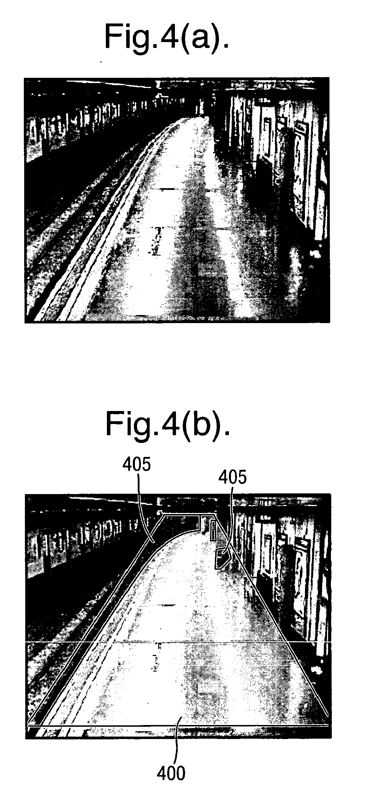

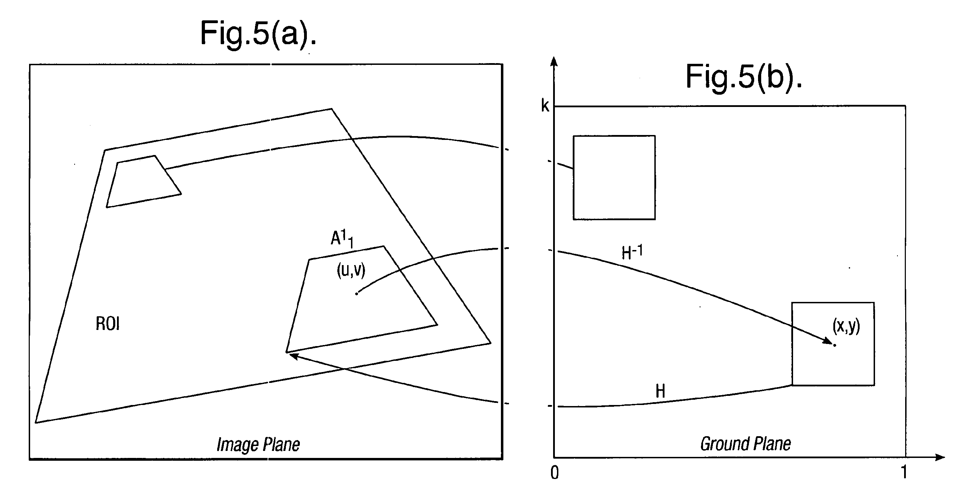

The image in Figure 4(a) shows an example of an underground station scene and the image in Figure 4(b) includes a graphical overlay, which highlights the platform ROI 400; nominally, a relatively large polygonal area on the ground of the station platform. For flexibility and practical consideration of an application, certain parts (for example, those polygons identified inside the ROI 405, as they either fall outside the edge of the platform or could be a vending machine or fixture) of this initial selection can be masked out, resulting in the actual ROI that is to be accounted for in the following computational procedures. Next, a planar homography between the camera image plane and the ground plane is estimated. The estimation of the planar homography is illustrated in Figure 5, which illustrates how objects can be mapped between an image plane and a ground plane. The transformation between a point in the image plane and its correspondence in the ground plane can be represented by a 3 by 3 homography matrix H in a known way.

Given the estimated homography, a density map for the ROI can be computed, or a weight is assigned to each pixel within the ROI of the image plane, which accounts for the camera's perspective projection distortion [1]. The weight $w_i$ attached to the $i^{th}$ pixel after normalisation can be obtained as:

$$ w_i = \frac{A_i^I / A_G}{\sum_{k \in ROI} A_k^I / A_G} = \frac{A_i^I}{\sum_{k \in ROI} A_k^I} \tag{1} $$

where the square area centred on (x, y) in the ground plane in Figure 5a is denoted as $A_G$ (which is fixed for all points) and its corresponding trapezoidal area centred on (u, v) in the image plane in Figure 5b is denoted as $A_i^I$.

Having defined the ROI and applied weights to the pixels, a non-uniform partition of the ROI into a number of image blobs can be automatically carried out, after which each blob is assigned a single weight. The method of partitioning the ROI into blobs and two typical ways of assigning weights to blobs are described below.

Uniform ROI partitions will now be described by way of an introduction to generating a non-uniform partition.

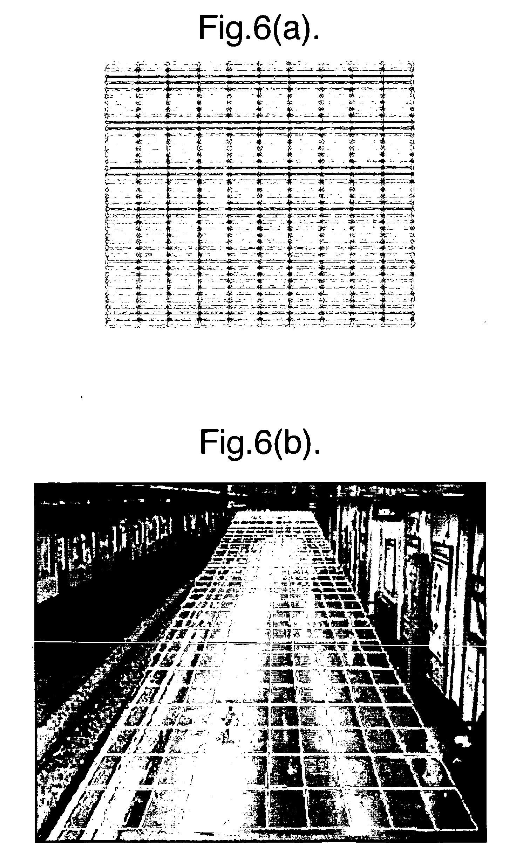

The first step in generating a uniform partition, is to divide the ground plane into an array of relatively small uniform blobs (or sub-regions), which are then mapped to the image plane using the estimated homography. Figure 6a illustrates an exemplary array of blobs on a ground plane and Figure 6b illustrates that same array of blobs mapped onto a platform image using the homography. Since the homography accounts for the perspective distortion of the camera, the resulting image blobs in the image plane assume an equal weighting given that each blob corresponds to an area of the same size in the ground plane. However, in practical situations, due to different imaging conditions (for example camera orientation, mounting height and the size of ROI), the sizes of the resulting image blobs may not be suitable for particular applications.

In a crowd congestion estimation problem, any blob which is too big or too small causes processing problems: a small blob cannot accommodate sufficient image data to ensure reliable feature extraction and representation; and a large blob tends to introduce too much decision error. For example, a large blob which is only partially congested may still end up being considered as fully congested, even if only a small portion of it is occupied or moving, as will be discussed below.

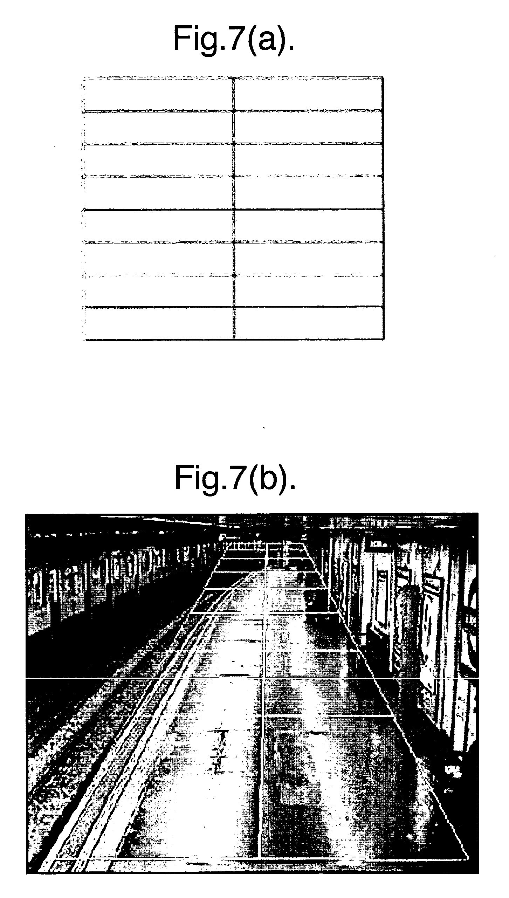

Figure 7a shows another exemplary uniform partition using an array of relatively large uniform blobs on a ground plane and the image in Figure 7b has the array of blobs mapped onto the same platform as in Figure 6.

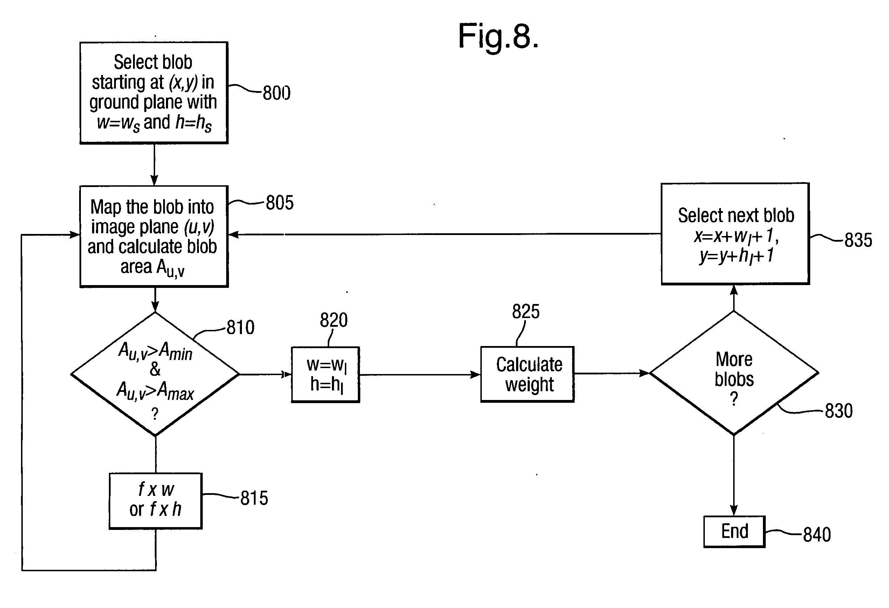

It can be observed from Figure 6b that the image blobs obtained in the far end of the platform are too small to undergo any meaningful processing, as there is only a very small number of pixels involved, and not enough for any reliable feature calculation. Conversely, Figure 7b shows a situation where the size of the uniform blob in the ground plane is so selected that reasonably sized image blobs are obtained in the far end of the platform, whereas the image blobs in the near end of the platform are too big for applications like congestion estimation. In order to overcome the difficulty in deciding on an appropriate blob size to perform uniform ground plane partition, we propose an method for non-uniform blob partitioning, as will now be described with reference to the flow diagram in Figure 8.

Assuming $w_S$ and $h_S$ are the width and height of the blobs for a uniform partition (for example, that described in Figure 6a) of the ground plane, respectively. In a first step 800, a ground plane blob of this size with its top-left hand corner at $(x,y)$ is selected, and the size $A_{u,v}$ of its projected image blob calculated in a step 805. In step 810, if $A_{u,v}$ is less than a minimum value $A_{min}$ then the width and height of the ground plane blob are increased by a factor $f$ (typical value used 1.1) in step 815, the process iterates to step 805 with the area being recalculated. In practice, the process may iterate for a few times (for example 3-6 times) until the size of the resulting blob is within the given limits. At this time, the blob ends up with a width $w_I$ and a height $h_I$ in step 820. Next, a weighting for the blob is calculated in step 825, as will be described below in more detail.

In step 830, if more blobs are required to fill the array of blobs, the next blob starting point is identified as $x+w_I+1$, $y+h_I+1$, in step 835 and the process iterates to step 805 to calculate the next respective blob area. If no more blobs are required then the process ends in step 830.

In practice, according to the present embodiment, blobs are defined a row at a time, starting from the top left hand corner, populating the row from left to right and then starting at the left hand side of the next row down. Within each row, according to the present embodiment, the blobs have an equal height. Of course, other ways of arranging blobs can be envisaged in which blobs in the same row (or when no rows are defined as such) do not have equal heights. The key issue when assigning blob size is to ensure that there are a sufficient number of pixels in an appropriate distribution to enable relatively accurate feature analysis and determination. The skilled person would be able to carry out analyses using different sizes and arrangements of blobs and determine optimal sizes and arrangements thereof without undue experimentation. Indeed, on the basis of the present description, the skilled person would be able to select appropriate blob sizes and placements for different kinds of situation, different placements of camera and different platform configurations.

Regarding assigning a weighting to each blob, which has a modified width and height, $w_I$ and $h_I$ respectively, there are typically two ways of achieving this.

A first way of assigning a blob weight is to consider that uniform partition of the ground plane (that is, an array of blobs of equal size) renders each blob having an equal weight proportional to its size ($w_S \times h_S$), the changes in blob size as made above result in the new blob assuming a weight

$$(w_I \times h_I) / (w_S \times h_S).$$

An alternative way of assigning a blob weight is to accumulate the normalised weights for all the pixels falling within the new blob; wherein the pixel weights were calculated using the homography, as described above.

According to the present embodiment, an exception to the process for assigning blob size occurs when a next blob in the same row may not obtain the minimum size required, within the ROI, when it is next to the boarder of the ROI in the ground plane. In such cases, the under-sized blob is joined with the previous blob in the row to form a larger one, and the corresponding combined blob in the image plane is recalculated. Again, there are various other ways of dealing with the situation when a final blob in a row is too small. For example, the blob may simply be ignored, or it could be combined with blobs in a row above or below; or any mixture of different ways could be used.

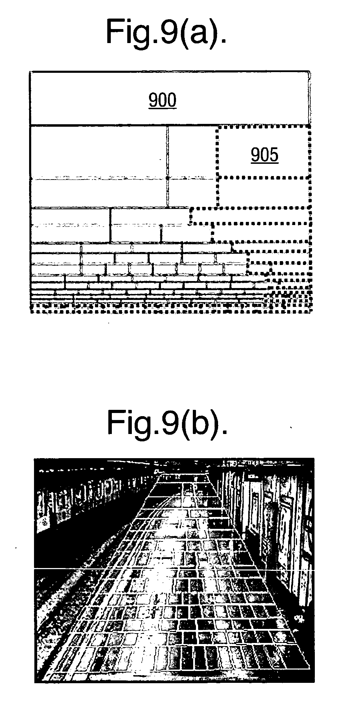

The diagram in Figure 9a illustrates a ground plane partitioned with an irregular, or non-uniform, array of blobs, which have had their sizes defined according to the process that has just been described. As can be seen, the upper blobs 900 are relatively large in both height and width dimensions - though the blob heights within each row are the same - compared with the blobs in the lower rows. As can also be seen, the blobs bounded by dotted lines 905 on the right hand side and at the bottom indicate that those blobs were obtained by joining two blobs for the reasons already described.

The image in Figure 9b shows the same station platform that was shown in Figures 6b and 7b but, this time, having mapped onto it the non-uniform array of blobs of Figure 9a. As can be seen in Figure 9b, the mapped blobs have a far more regular size than those in Figures 6b and 7b. It will, thus, be appreciated that the blobs in Figure 9b provide an environment in which each blob can be meaningfully analysed for feature extraction and evaluation purposes.

As mentioned above in connection with Figure 4, some blobs within the initial ROI may not be taken into full account (even no account at all) for a congestion calculation, if the operator masks out certain scene areas for practical considerations. According to the present embodiment, such a blob $b_k$ can be assigned a perspective weight factor $\omega_k$ and a ratio factor $r_k$, which is the ratio between the number of unmasked pixels and the total number of pixels in the blob. If there are a total number of $N_b$ blobs in the ROI, the contribution of a congested blob $b_k$ to the overall congestion rating will be $\omega_k \times r_k$. If the maximum congestion rating of the ROI is defined to be 100, then the congestion factor of each blob will be normalised by the total congestions of all blobs. Therefore, a congestion contributor $C_k$ of blob $b_k$ may be presented as:

$$C_k = \frac{\omega_k \times r_k}{\sum_{l=0}^{N_b} \omega_l \times r_l} \times 100 \qquad (2)$$

As has been described, an efficient scheme is employed to identify foreground pixels in the current video frames that undergo certain meaningful motions, which are then used to identify blobs containing dynamic moving objects (pedestrian passengers). Once the foreground pixels are detected, for each blob $b_k$, the ratio $R_k^f$ is calculated between the number of foreground pixels and its total size. If this ratio is higher than a threshold value $\tau_f$, then blob $b_k$ is considered as containing possible dynamic congestion. However, sudden illumination changes (for example, the headlight of an approaching train or changes in traffic signal lights) possibly increase the number of foreground pixels within a blob. In order to deal with these effects, a secondary measure $V_k^d$ is taken, which first computes the consecutive frame difference of grey level images, on $F(t)$ and its preceding one $F(t-1)$, and then derives the variance of the difference image with respect to each blob $b_k$. The variance value due to illumination variation is generally lower as compared to that caused by an object motion, since, as far as a single blob is concerned, the illumination changes are considered to have a global effect. Therefore, according to the present embodiment, blob $b_k$ is considered as dynamically congested, which will contribute to the overall scene congestion at the time, if, and only if, both of the following conditions are satisfied, that is:

$$R_k^f > \tau_f \quad \text{and} \quad V_k^d > \tau_{mv}, \qquad (3)$$

where $\tau_{mv}$ is a suitably chosen threshold value for a variance metric. The set of dynamically congested blob is noted as $B_D$ thereafter.

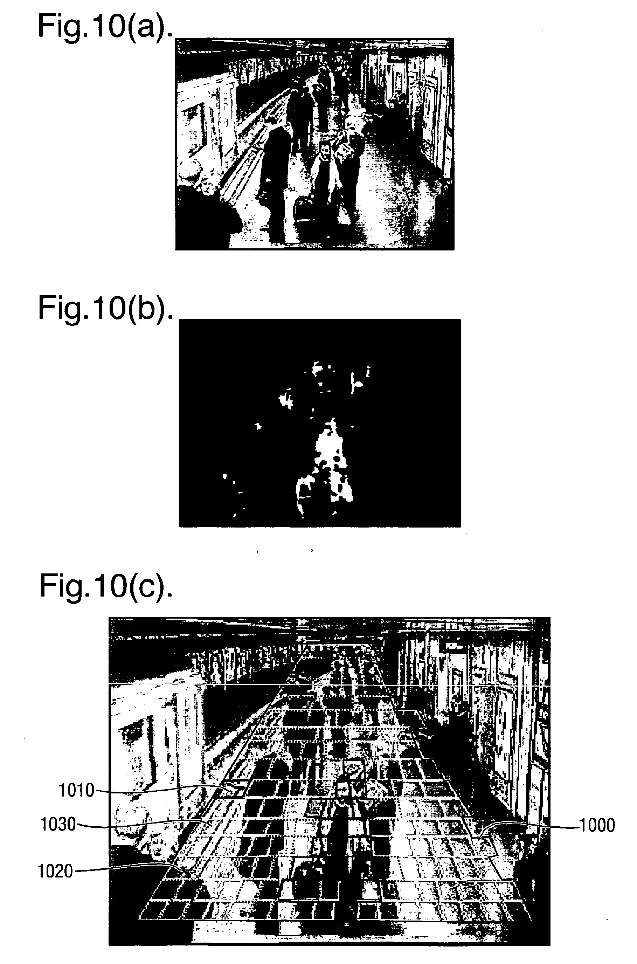

A significant advantage of this blob-based analysis method over a global approach is that even if some of the pixels are wrongly identified as foreground pixels, the overall number of foreground pixels within a blob may not be enough to make the ratio $R_k^f$ higher than the given threshold. This renders the technique more robust to noise disturbance and illumination changes. The scenario illustrated in Figure 10 demonstrates this advantage.

Figure 10a is a sample video frame image of a platform which is sparsely populated but including both moving and static passengers. Figure 10b is a detected foreground image of Figure 10a, showing how the foregoing analysis identifies moving objects and reduces false detections due to shadows, highlights and temporarily static objects. It is clear that the most significant area of detected movement coincides with the passenger in the middle region of the image, who is pulling the suitcase towards the camera. Other areas where some movement has been detected are relatively less significant in the overall frame. Figure 10c is the same as the image in 10a, but includes the non-uniform array of blobs mapped onto the ROI 1000: wherein, the blobs bounded by a solid dark line 1010 are those that have been identified as containing meaningful movement; blobs bounded by dotted lines 1020 are those that have been identified as containing static objects, as will be described hereinafter; and blobs bounded by pale boxes 1030 are empty (that is, they contain no static or dynamic objects). As shown, the blobs bounded by solid dark lines 1010 coincide closely with movement, the blobs bounded by dotted lines 1020 coincide closely with static objects and the blobs bounded by pale lines 1030 coincide closely with spaces where there are no objects.

Regarding zero-motion regions, there are normally two causes for an existing dynamically congested blob to lose its 'dynamic' status: either the dynamic object moves away from that blob or the object stays motionless in that blob for a while. In the latter case, the blob becomes a so-called "zero-motion" blob or statically congested blob. To detect this type of congestion successfully is very important in sites such as underground station platforms, where waiting passengers often stand motionless or decide to sit down in the chairs available.

If on a frame by frame basis any dynamically congested blob $b_k$ becomes non-congested, it is then subjected to a further test as it may be a statically congested blob. One method that can be used to perform this analysis effectively is to compare the blob with its corresponding one from the LTSB model. A number of global and local visual features can be experimented for using this blob-based comparison, including colour histogram, colour layout descriptor, colour structure, dominant colour, edge histogram, homogenous texture descriptor and SIFT descriptor.

After a comparative study, MPEG-7 colour layout (CL) descriptor has been found to be particularly efficient at identifying statically congested blobs, due to its good discriminating power and because it has a computationally relatively low overhead. In addition, a second measure of variance of the pixel difference can be used to handle illumination variations, as has already been discussed above in relation to dynamic congestion determinations.

According to this method, the 'city block distance' in colour layout descriptors $d_{CLs}$ is computed between blob $b_k$ in the current frame and its counterpart in the LTSB model. If the distance value is higher than a threshold $\tau_{cl}$, then blob $b_k$ is considered as a statically congested blob candidate. However, as in the case of dynamic congestion analysis, sudden illumination changes can cause a false detection. Therefore, to be sure, the variance $V_s$ of the pixel difference in blob $b_k$ between the current frame and LTSB model is used as a secondary measure. Therefore, according to the present embodiment, blob $b_k$ is declared as a statically congested one that will contribute to the overall scene congestion rating, if and only if the following two conditions are satisfied:

$$d_{CL_s} > \tau_{cl} \quad \text{and} \quad V_s > \tau_{sv}, \tag{4}$$

where $\tau_{sv}$ is a suitably chosen threshold. The set of statically congested blobs is thereafter noted as $B_S$. As already indicated, Figure 10c shows an example scene where the identified statically congested blobs are depicted as being bounded by dotted lines.

A method for maintaining the LTSB model will now be described. Maintenance of the LTSB is required to take account of changes to possible scene structure, for example installing or removing a vending machine, or replacing failed interior lights. The LTSB model used should be updated in a continuous manner. Indeed, for any blob $b_k$ that has been free from (dynamic or static) congestion continuously for a significant period of time (for example, 2 minutes) its corresponding LTSB blob is updated using a linear model, as follows.

If $N_f$ frames are processed over the defined time period and for a pixel $i \in b_k$ if, its mean intensity $M_i^{\mathbf{x}}$ and variance $V_i^x$ for each colour band, $x \in (R,G,B)$, are calculated as follows:

$$M_i^x = \frac{\sum_{l=1}^{N_f} I_{l,i}^x}{N_f}, \qquad V_i^x = \frac{\sum_{l=1}^{N_f}(I_{l,i}^x - M_i^x)}{N_f} \qquad (5)$$

Next, according to the present embodiment, if, for $i \in b_k$, the condition $V_i^x < \tau_{h_x}$, $x \in (R,G,B)$ is satisfied for at least 95% of the pixels within blob $b_k$, then the corresponding pixels $I_i^{BG}$ in the LTSB model will be updated as:

$$I_i^{BG.X} = \alpha \times M_i^X + (1-\alpha)I_i^{BG.X}, \quad X \in (R,G,B) \qquad (6)$$

where $\alpha = 0.01$. For the remaining pixels within blob $b_k$ that fail to meet the condition, the corresponding ones in the LTSB model will not be changed.

Note that in the above processing, the counts for non-congested blobs are returned to zero whenever an update is made or a congested case is detected. In practice, the pixel intensity value and the squared intensity value (for each colour band) are accumulated with each incoming frame to ease the computational load.

Accordingly, an overall scene congestion rating can be estimated by adding the congestions associated with all the (dynamically and statically) congested blobs. Given a total number of $N_b$ blobs for the ROI, an overall congestion (*TotalC*) can be expressed as:

$$TotalC = \sum_{k \in B_D} C_k R_k^f + \sum_{k \in B_S} C_k, \qquad (7)$$

where $C_k$ is the congestion factor associated with blob $b_k$ given previously in Equation (2).

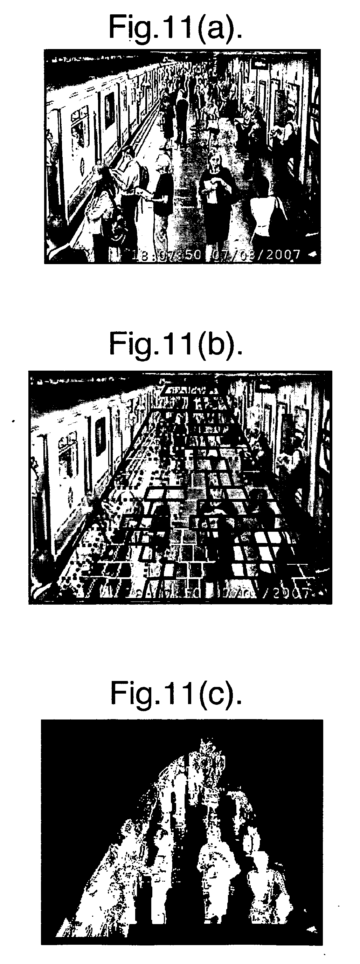

It has been found that the blob-based visual scene analysis approach discussed so far has been very effective and consistent in dealing with high and low crowd congested situations in underground platforms. However, one observation that has emerged, after many hours of testing on the live video data. The observation is that the approach tends to give a higher congestion level value when people are scattered around on the platform in medium congestion situation. This is more often the case when, in the camera's view, the far end of the platform is more crowded compared to the near end of the platform, simply because the blobs in the far end of the platform carry more weight to account for the perspective nature of the platform appearance in the videos. To illustrate this, Figure 11 a shows an example scene where the actual congestion level on the platform is moderate, but passengers are scattered all over the platform, covering a good deal of the blobs especially in the far end of the ROI. As can be seen in Figure 11c, most of the blobs are detected as congested, leading to an overly-high congestion level estimation.

The main difference between a scattered, or loosely distributed, crowd and a highly congested crowd scene is that there will tend to be more free space between people in the former case as compared to the latter. Since this free space and congested space are evenly distributed over all the blobs, as shown in Figure 11, the localised blob-based congestion estimation approach alone has not provided a particularly accurate assessment in this specific example. However, it has been found that a suitably-defined global measure of the scene provides one way of improving the performance of the overall process.

In particular, it has been found that a measure based on the use of a thresholded pixel difference within the ROI, between the current frame and the LTSB model, provides a suitable measure. For example, consider a pixel $i \in$ *ROI* in the current frame, the maximum intensity difference $D_i^{max}$ as compared to its counterpart in the LTSB model in three colour bands is obtained by:

$$D_i^{\max} = Max(D_i^R, D_i^G, D_i^B)$$

If $D_i^{max} > \tau_s$ is satisfied, then pixel $i$ is counted as a 'congested pixel' or $i \in P_c$, where $\tau_s$ is a suitably chosen threshold. Figure 11b shows such an example of 'congested pixels' mask. Now, the global congestion measure $GM$ can be defined as the aggregation of weights $w_i$ (see Equation (1)) of all of the congested pixels. In other words:

$$GM = \sum_i w_i, \quad i \in P_c$$

where $0 \le GM < 1.0$. As a result, the final congestion ($OverallC$) for the monitored scene can be computed as:

$$OverallC = TotalC \times f(GM),$$

where $f(.)$ can be a linear function or a sigmoid function:

$$f(x) = \frac{1}{1 + e^{-\alpha(x-0.5)}}$$

and where $\alpha = 8$ has been used according to the present embodiment.

Referring again to the example illustrated in Figure 11, the initially overestimated congestion level was 67. However, by including the final global scene scatter analysis, congestion was brought down to 31, reflecting the true nature of the scene; the $GM$ value in Figure 11c being 0.478.

According to embodiments of the present invention, the techniques described above have been found to be accurate in detecting the presence, and the departure and arrival instants, of a train by a platform. This leads to it being possible to generate an accurate account of actual train service operational schedules. This is achieved by detecting reliably the characteristic visual feature changes taking place in certain target areas of a scene, for example, in a region of the original rail track that is covered or uncovered due to the presence or absence of a train, but not obscured by passengers on a crowded platform. Establishing the presence, absence and movement of a train is also of particular interest in the context of understanding the connection between train movements and crowd congestion level changes on a platform. When presented together with the congestion curve, the results have been found to reveal a close correlation between trains calling frequency and changes in the congestion level of the platform. Although the present embodiment relates to passenger crowding and can be applied to train monitoring, it will be appreciated that the proposed approach is generally applicable to a far wider range of dynamic visual monitoring tasks, where the detection of object deposit and removal is required.

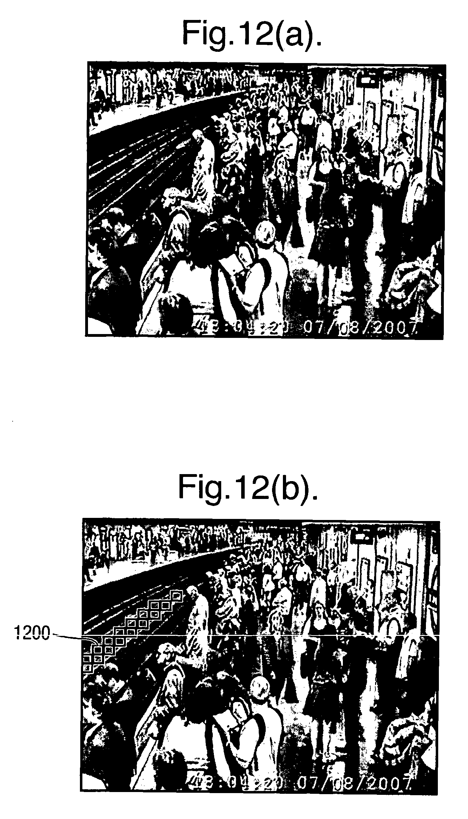

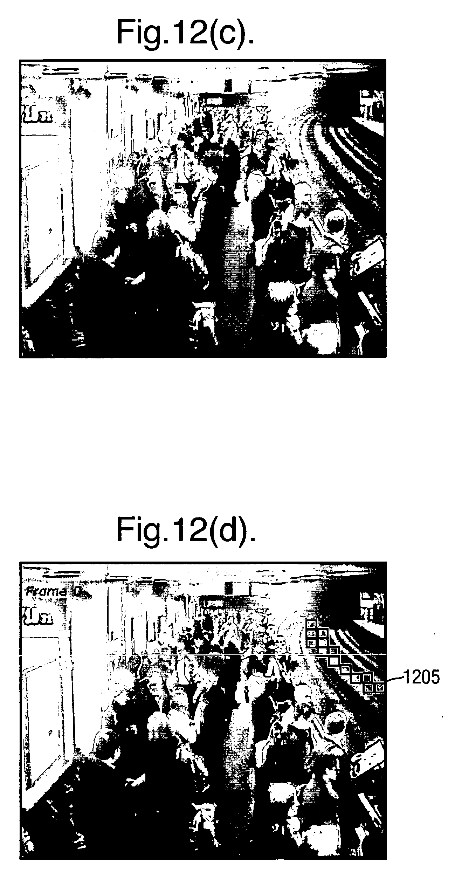

Unlike for a well-defined platform area, a ROI, according to embodiments of the present invention, in the case of train detection does not have to be non-uniformly partitioned or weighted to account for homography. First, the ROI is selected to comprise a region of the rail track where the train rests whilst calling at the platform. The ROI has to be selected so that it is not obscured by a waiting crowd standing very close to the edge of the platform, thus potentially blocking the camera's view of the rail track. Figure 12a is a video image showing an example of a one platform in a peak hours, highly crowded platform situation. However, observations of the train operations in various situations throughout a day show that there is always an empty region in between the two rail tracks that can be selected as the ROI for train detection, as the view in that region will only change if a train is seen at the station. In Figure 12b, the selected ROI for Platform A is depicted as light boxes 1200 along a region of the track. Also, Figures 12c and 12d respectively illustrate another platform, and the specification of its ROI for train detection there.

As indicated, perspective image distortion and homography of the ROI does not need to be factored into a train detection analysis in the same way as for the platform crowding analysis. This is because the purpose is to identify, for a given platform, whether there is a train occupying the track or not, whilst the transient time of the train (from the moment the driver's cockpit approaching the far end of the platform to a full stop or from the time the train starts moving to total disappearance from the camera's view) is only a few seconds. Unlike the previous situation where the estimated crowd congestion level can take any value between 0 and 100, the 'congestion level' for the target 'train track' conveniently assumes only two values (0 or 100).

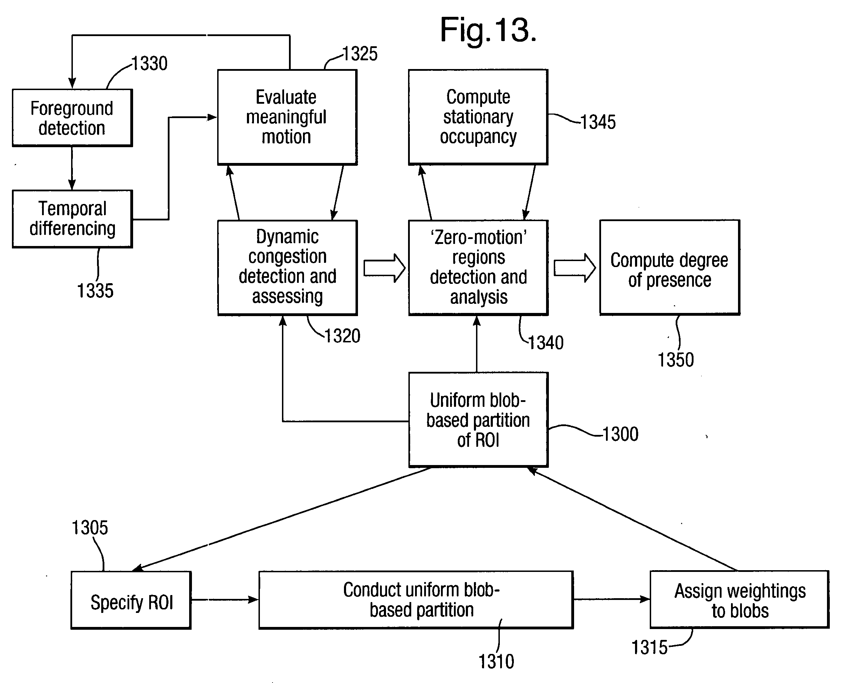

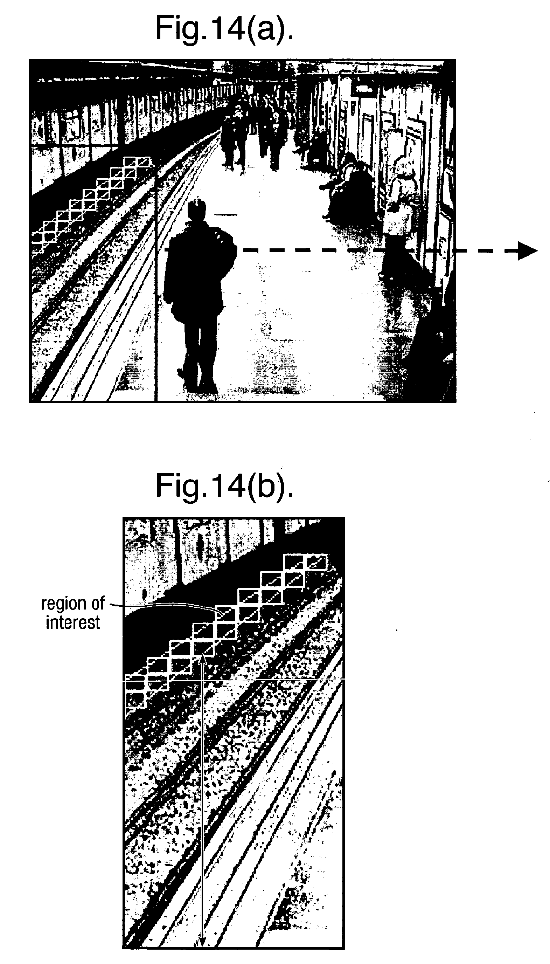

Figure 13 is a block diagram showing four main components of analytics engine 115, which are operable for the purposes of train detection. The first component 1300 is arranged to specify a region of interest (ROI) of a scene 1305, conduct a uniform partition of the ROI by dividing the ROI into uniform blobs of suitable size (as described above) 1310 and, if a large portion of a blob, say over 95%, is contained in the specified ROI for train detection, then the blob is incorporated into the calculations and a weight is assigned 1315 according to a scale variation model, or the weight is obtained by multiplying the percentage of pixels of the blob falling within the ROI and the distance between the blob's centre and the side of the image close to the camera's mounting position. This is shown in Figures 14a and Figure 14b, wherein blobs further away from the camera obtain more weight compared to the blobs close to the camera. The second component 1320, is arranged to evaluate instantaneous changes in visual appearance features due to meaningful motions 1325 (of trains) by way of foreground detection 1330 and temporal differencing 1335. The third component 1340, is arranged to account for stationary occupancy effects 1345 when trains move slowly or remain stationary in the scene, for regions of the ROI that are not deemed to be dynamically congested. It should be noted that, for both the second and third components, all the operations are performed on a blob by blob basis. However, if both crowd analysis and train detection are being carried out, it may be most expedient to analyse an entire image and then select appropriate blob regions to analyse for respective crowd and train detection analyses. In this way, the image analyses steps only need to happen once. The fourth component 1350 computes a so-called degree of presence. In effect, a measure of congestion is generated as in Figure 2, and whether or not the train is deemed to be present is determined by whether the measure of congestion is above (train detected) or below (no train detected) a specified threshold; where measure of congestion is termed 'degree of presence' in the case of train detection. The threshold level may be set according to whether train detection is deemed to occur when the train first enters the station (present in some leading blobs only) and while still moving (dynamic congestion) or whether detection is deemed to occur when the train has fully entered the station (present in all blobs) and has come to rest (static congestion).

Comparing Figures 2 and 13, it is apparent that the global scatter scene analysis 255 of Figure 2 is not necessary for train detection, as there is no concept of sparse congestion as such for trains: the train is either present or not (above or below the threshold).

In embodiments of the invention in which train detection is involved as well as crowd analysis, it will be appreciated that, while train detection using the analysis techniques described herein are extremely convenient, since the entire analysis can be enacted by a single PC and camera arrangement, there are many other ways of detecting trains: for example, using platform or track sensors. Thus, it will be appreciated that embodiments of the present invention which involve train detection are not limited only to applying the train detection techniques described herein.

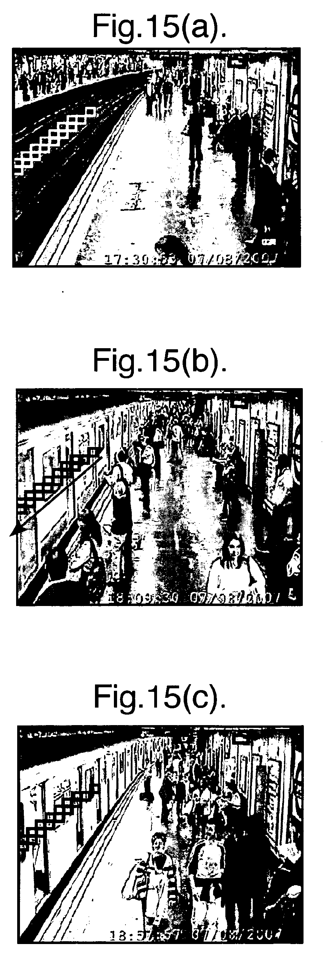

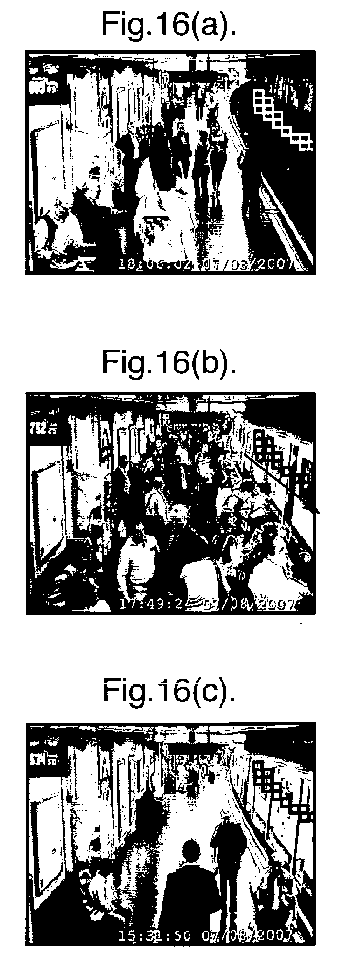

The video images in Figures 15 and 16 illustrate the automatically computed status of the blobs that cover the target rail track area under different train operation conditions. In Figures 15a and 16a, the images show no train present on the track, and the blobs are all empty (illustrated as pale boxes). In Figures 15b and 16b, trains are shown moving (either approaching or departing) along the track beside the platform. In this case, the blobs are shown as dark boxes, indicating that the blobs are dynamically congested, with an arrow below the boxes indicating the direction of travel. Finally, in Figures 15c and 16c, the trains are shown motionless (with the doors open for passengers to get on or off the train). In this case, the blobs are shown as dark boxes without an accompanying arrow, indicating that the blobs are statically congested.

In order to demonstrate the effectiveness and efficiency of embodiments of the present invention for estimating crowd congestion levels and train presence detection, extensive experiments have been carried out on both highly compressed video recordings (motion JPEG + DivX) and real-time analogue camera feeds from operational underground platforms that are typical of various passengers traffic scenarios and sudden changes of environmental conditions. The algorithms can run in real-time in the analytics computer 105 (in this case, a modem PC, for example, an Intel Xeon dual-core 2.33 GHz CPU and 2.00 GB RAM running Microsoft Widows XP operating system) simultaneously, with two inputs of either compressed video streams or analogue camera feeds and two output data streams that are destined to an Internet connected remote server, with still about half of the resources spared. It found that the CIF size video frame ($352 \times 288$ pixels) is sufficient to provide necessary spatial resolution and appearance information for automated visual analyses, and that working on the highly compressed video data does not show any noticeable difference in performance as compared to directly grabbed uncompressed video. Details of the scenarios, results of tests and evaluations, and insights into the usefulness of the extracted information are presented below.

The characteristic of the particular video data being studied are described, with regard to two platforms A and B, in Tables 1 and 2 (at the end of this description). In the case of Platform A (Westbound), as illustrated in the image in Figure 12a, the video camera's field of view (FOV) covers almost the entire length of the platform. In the case of Platform B (Eastbound), as illustrated in the image in Figure 12c, the camera's FOV covers about three quarters of the length of the platform. Although the video recordings were made for up to 4 hours for each camera on each platform, the video segments selected, each lasting between three - six minutes, provided a very good representation of the typical situation and variations in crowd density and train detection. The time stamps attached to each clip also explain the apparent difference in behaviours of normal hours' passenger traffic and peak hours' commuters' traffic.

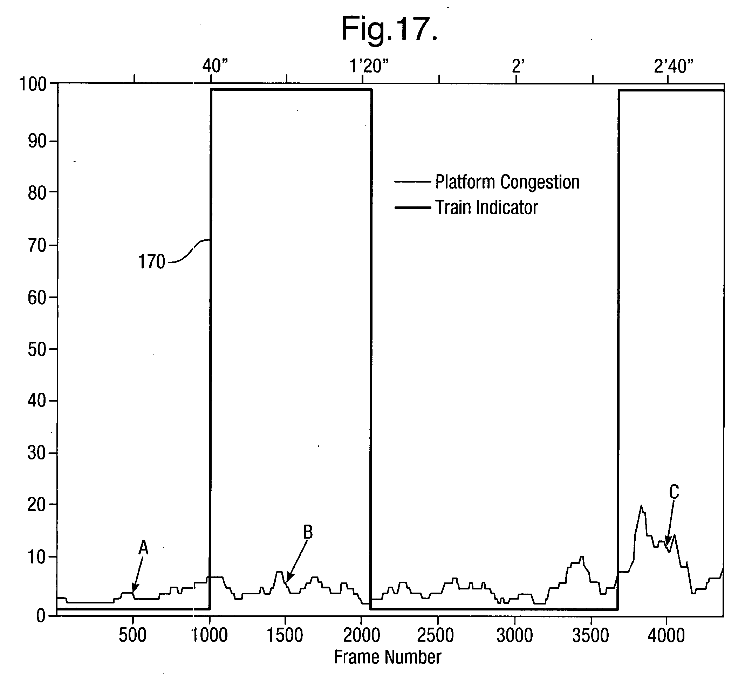

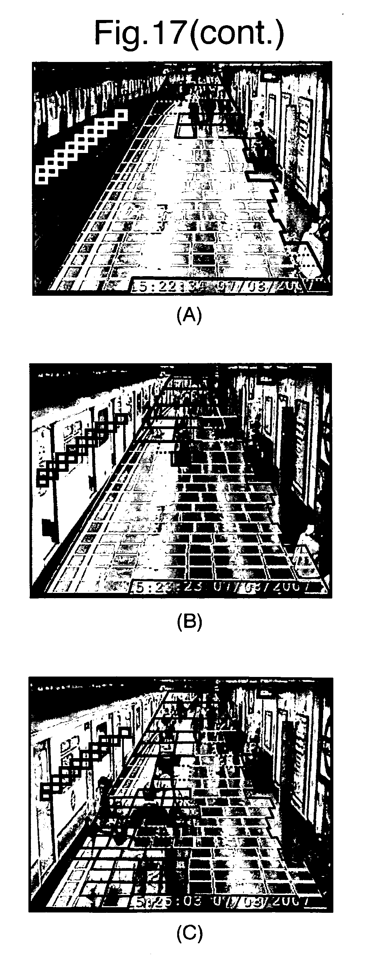

Figure 17 to Figure 20 present the selected results of the video scene analysis approaches for congestion level estimation and train presence detection, running on video streams from both compressed recordings and direct analogue camera feeds reflecting a variety of crowd movement situations. The crowd congestion level is represented on a graph by a continuous scale between 0 and 100, with '0' describing a totally empty platform and '100' a completely congested non-fluid scene, whereas the train detection is measured on the graph as either 0 or 100 (a step function 170) depending on whether the degree of presence is below or above the specified threshold.

Snapshots (A), (B) and (C) in Figure 17 are snapshots of Platform A in scenario A1 in Table 1 taken over a period of about three minutes. The graph in Figure 17 represents congestion level estimation and train presence detection. As shown in the graph, at times (A), (B) and (C) there is a generally low-level crowd presence. More particularly, in snapshot (A), the platform blobs indicate correctly that dynamic congestion starts in the background (near the top) and gets closer to the camera (towards the bottom or foreground of the snapshot) in snapshots (B) and (C), and in (C) the congestion is along the left hand edge of the platform near the train track edge. Clearly, snapshot (C) has the highest congestion, although the congestion is still relatively low (below 15). In relation to train detection, at time (A) there is no train (train ROI blobs bounded by pale solid lines indicating no congestion), and at times (B) and (C) different trains are calling at the station (train ROI blobs bounded by solid dark lines indicating static congestion).

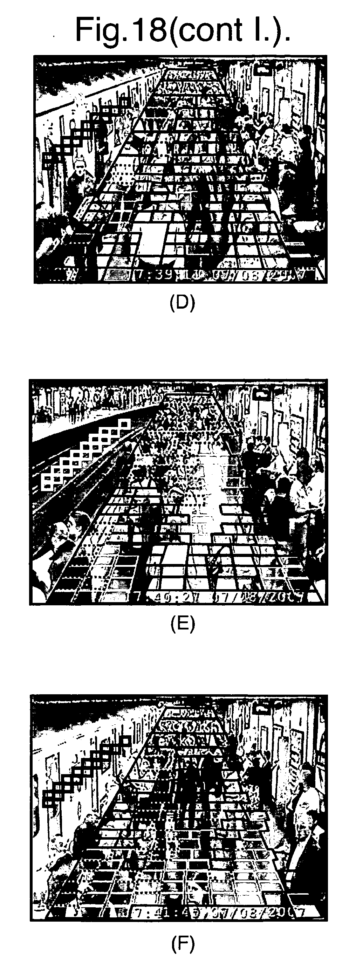

Snapshots (D), (E) and (F) in Figure 18 are snapshots of Platform A in scenario A2 of Table 1 taken over a period of about three minutes. Graph (a) in Figure 18 plots overall platform congestion, whereas graph (b) breaks congestion into two plots - one for dynamic congestion and one for static congestion. In this case, snapshot (E) has no train (train blobs bounded by pale lines), whereas snapshots (D) and (F) show a train calling (train blobs bounded by dotted lines). As shown, it is clear that the congestion is relatively high (about 90, 44 and 52 respectively) for each snapshot. However, of significant interest is the breakdown of platform congestion shown in graph (b), in which, in snapshot (D), the platform blobs indicate correctly that most of the congestion is attributable to dynamic congestion over the entire platform, in snapshot (E) dynamic and static congestion are about equal, with mainly dynamic congestion in the foreground and static congestion in the background, whereas, in snapshot (F), there is about double the dynamic congestion as static congestion, with most dynamic congestion being in the background.

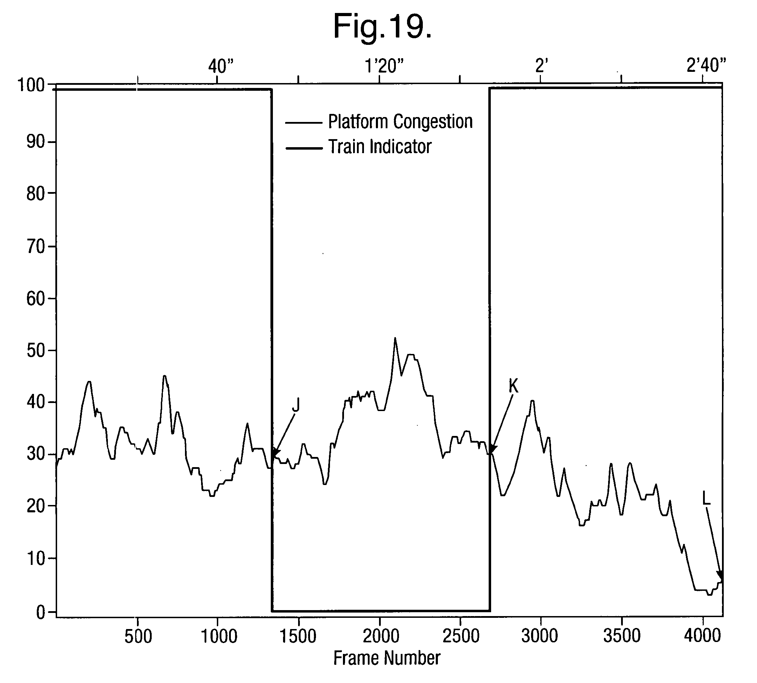

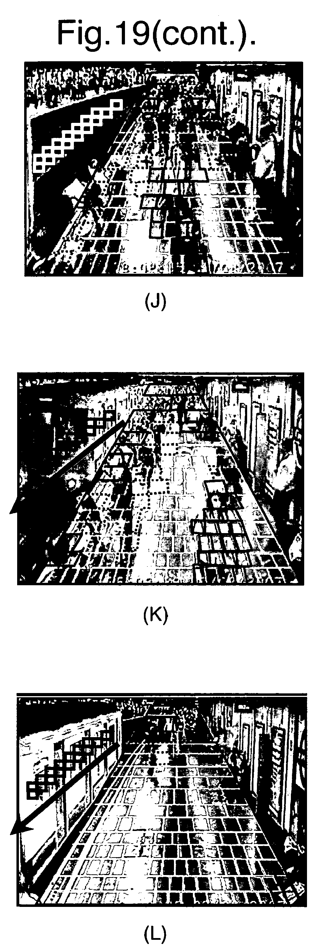

Snapshots (J), (K) and (L) in Figure 19 are snapshots of Platform A in scenario A3 of Table 1 taken over a period of about three minutes. The graph indicates that the congestion situation changes from medium-level crowd scene to lower level crowd scene, with trains leaving in snapshots (J) (train blobs bounded by pale lines, as the train is not yet over the ROI) and (L) (train blobs bounded by dark lines indicating dynamic congestion) and approaching in snapshot (K) (blobs bounded by dark lines). More particularly, in snapshot (J), the platform blobs indicate correctly that congestion is mainly static, apart dynamic congestion in the mid-foreground due to people walking towards the camera, in (K) there is a mix of static and dynamic congestion along the left hand side of the platform near the train track edge and dynamic congestion in the right hand foreground due to a person walking towards the camera and, in (L), there is some static congestion in the distant background.

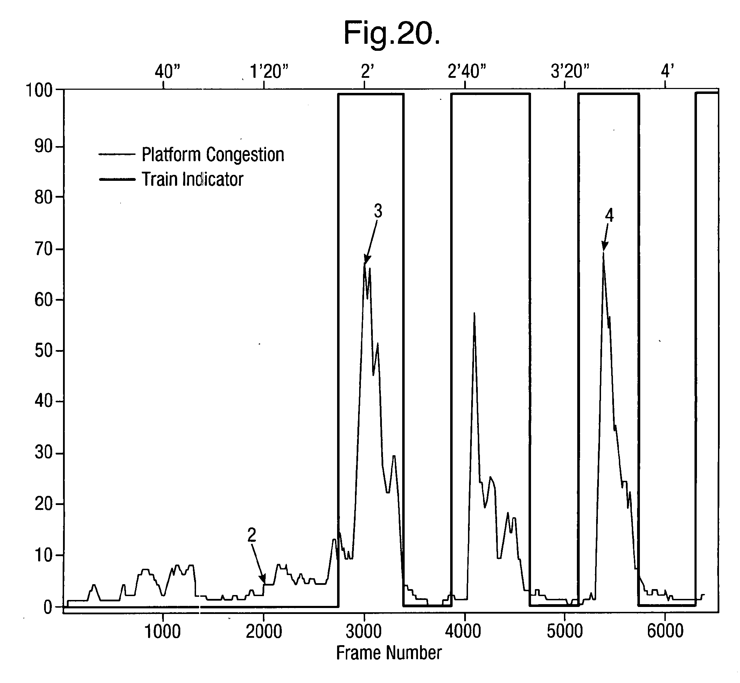

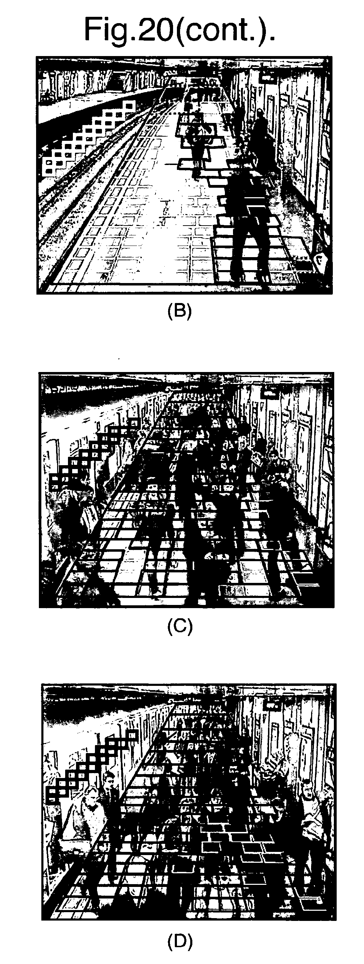

Snapshots (2), (3) and (4) in Figure 20 are snapshots of Platform A taken over a period of about four and a half minutes. The graph illustrates that the scene changes from an initially quiet platform to a recurrent situation when the crowd builds up and disperses (shown as the spikes in the curve) very rapidly within a matter of about 30 seconds with a train's arrival and departure. The snapshots are taken at three particular moments, with no train in snapshot (2) (train blobs bounded by pale lines), and with a train calling at the station in snapshots (3) and (4) (train blobs bounded by dotted lines). This example was taken from a live video feed so there is no corresponding table entry. More particularly, in snapshot (2), the platform blobs indicate correctly that there is some dynamic congestion on the right hand side of the platform due to people walking away from the camera, whereas in (3) and (4) the platform is generally dynamically congested.

By carefully inspecting these results it is possible to identify several interesting points, which illustrate the accurate performance of the approach described according to the present embodiment.

First, it is clear that the approach works well across two different camera set ups, and a variety of different crowd congestion situations, in real-world underground train station operational environments. For the train detection, the precision of detection time has been found to be within about two seconds of actual train appearance or disappearance by visual comparison, and for the platform congestion level estimation, the results have been seen to faithfully reflect the actual crowd movement dynamics with the required level of accuracy as compared with experienced human observers.

By drawing the results of congestion level estimation and train presence detection together in the same graph, we are able to gain insights into the different impacts that a train calling at a platform may have on the platform congestion level, considering also that the platform may serve more than one underground line (such as the District Line and the Circle Line in London). At a generally low congestion situation, as shown in Figure 17, a train calling at a platform does not affect the congestion level in a noticeable way, as, after all, only a few passengers are waiting to get on or off a train. At peak hours, however, the congestion level remains generally high, as a train is normally close to its capacity: whilst it picks up some waiting passengers, others have to wait for the next service, while even more passengers continue to enter the platform. This situation is shown in Figure 18. This can be especially problematic if the train service running interval is longer than one minute. On the other hand, Figure 20 reveals a different type of information, in which the platform starts off largely quiet, but when a train calls at the station, the crowd builds up and disperses very rapidly, which indicates that this is largely a one way traffic, dominated by passengers getting off the train. Combined with high frequency of train services detected at this time, we can reasonably infer, and indeed it is the case, that this is the morning rush hours traffic comprising passengers coming to work.

In persistently high level platform congestion situations as depicted in Figure 18, the separation of the dynamic and static congestion components, as manifested by the dynamically congested blobs and the statically congested blobs, leads to a better understanding of the nature of the crowd congestion. As can be seen, the dynamic congestion (upper curve) for much of the duration dominates the scene (that is, it remains above or equal to the static congestion level), which explains that the congestion, though very high, is generally fluid. As such, there are no hard jams, and passengers are still able to move about on the platform, to get on and off of train carriages, and to find free space to stand.

The algorithms described above contain a number of numerical thresholds in different stages of the operation. The choice of threshold has been seen to influence the performance of the proposed approaches and are, thus, important from an implementation and operation point of view. The thresholds can be selected through experimentation and, for the present embodiment, are summarised in Table 3 hereunder.

In summary, aspects of the present invention provide a novel, effective and efficient scheme for visual scene analysis, performing real-time crowd congestion level estimation and concurrent train presence detection. The scheme is operable in real-world operational environments on a single PC. In the exemplary embodiment described, the PC simultaneously processes at least two input data streams from either highly compressed digital videos or direct analogue camera feeds. The embodiment described has been specifically designed to address the practical challenges encountered across urban underground platforms including diverse and changeable environments (for example, site space constraints), sudden changes in illuminations from several sources (for example, train headlights, traffic signals, carriage illumination when calling at station and spot reflections from polished platform surface), vastly different crowd movements and behaviours during a day in normal working hours and peak hours (from a few walking pedestrians to an almost fully occupied and congested platform), reuse of existing legacy analogue cameras with lower mounting positions and close to horizontal orientation angle (where such an installation causes inevitably more problematic perspective distortion and object occlusions, and is notably hard for automated video analysis).

Unlike in the prior art, a significant feature of our exemplified approach is to use a non-uniform, blob-based, hybrid local and global analysis paradigm to provide for exceptional flexibility and robustness. The main features are: the choice of rectangular blob partition of a ROI embedded in ground plane (in a real world coordinate system) in such a way that a projected trapezoidal blob in an image plane (image coordinate system of the camera) is amenable to a series of dynamic processing steps and applying a weighting factor to each image blob partition, accounting for geometric distortion (wherein the weighting can be assigned in various ways); the use of a short-term responsive background (STRB) model for blob-based dynamic congestion detection; the use of long-term stationary background (LTSB) model for blob-based zero-motion (static congestion) detection; the use of global feature analysis for scene scatter characterisation; and the combination of these outputs for an overall scene congestion estimation. In addition, this computational scheme has been adapted to perform the task of detecting a train's presence at a platform, based on the robust detection of scene changes in certain target area which is substantially altered (covered or uncovered) only by a train calling at the platform.

Extensive experimental studies have been conducted on collections of various representative scenarios from 8 hours video recordings (4 hours for each platform) as well as real-time field trials for several days over a normal working week. It has been found that the performance of congestion level estimation matches well with experienced observers' estimations and the accuracy of train detection is almost always within a few seconds of actual visual detection.

Finally, it should be pointed out that although the main discussion focus of this paper is on the investigation of video analytics for monitoring underground platforms, the approaches introduced are equally applicable to automated monitoring and analysis of any public space (indoor or outdoor) where understanding crowd movements and behaviours collectively are of particular interest from crime prevention and detection, business intelligence gathering, operational efficiency, and health and safety management purposes among others.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**References:**

[1] Dong Kong, Doug Gary, Hai Tao, "Counting pedestrians in crowds using viewpoint invariant training," Proc. of British Machine Vision Conference, 2005.

[2] Bangjun Lei and Li-Qun Xu, "Real-time outdoor video surveillance with robust foreground extraction and object tracking via multi-state transition management," in Elsevier Publisher Journal, Pattern Recognition Letters, 27, pp 1816 - 1825, April 2006.

[3] Fenjun Lv, Tao Zhao, Ramakant Nevatia, "Camera calibration from video of a walking human," IEEE Trans. on PAMI, vol.28, No.9, 2006.

[4] Li-Qun Xu, Jose-Luis Landabaso, and Bangjun Lei, "Segmentation and tracking of multiple moving objects for intelligent video analysis," BT Technology Journal, Special Issue on Intelligent Space, 22(3), Kluwer Academic Publishers, July 2004.

**Table 1:** A video collection of crowd scenarios for westbound Platform A: The reflections on the polished platform surface from the headlights of an approaching train and the interior lights of the train carriages calling at the platform, as well as the reflections from the outer surface of the carriages, all affect the video analytics algorithms in an adverse and unpredictable way.

| Video clips | Description of the dynamic scene | # of frames, time and (duration) |
|---|---|---|
| A1 | A lower crowd platform: Starting with an empty rail track, a train approaches the platform from far side of the camera's field of view (FOV), stops, and then departs from near-side of FOV; this scenario happens twice. | 4500 frames 15:22:14-15:25:22 (3') |
| A2 | A very high crowd platform: Crowded passengers stand close to the edge of the platform waiting for a train to arrive; a train stops and passengers negotiate their ways of getting on/off; the train was full and cannot take all of waiting passengers on board; the train departs and still many passengers are left on the platform. | 4500 frames 17:39:00-17:41:58 (3') |
| A3 | Varying crowd between low and medium: A train calls at the platform, being full, and then departs; the remaining passengers wait for the next train; a second train approaches and stops, passengers get on/off; the train departs and a few passengers walk on the platform. | 4500 frames 18:07:43-18:10:43 (3') |
| A4 | Trains move in the opposite platform: a train departs in the opposite platform B; there are, to a varied degree, a few people walking on the platform most of the time, meanwhile another train in platform B comes and goes; and eventually a train approaches the platform and the crowd starts building up. | 4500 frames 16:23:00-16:25:57 (3') |

(continued)

| Video clips | Description of the dynamic scene | # of frames, time and (duration) |
|---|---|---|
| A5 | Relatively non-varying crowd situation: a generally quiet platform with a few passengers; one train arrives and departs whilst a few passengers get off and on. | 4500 frames 18:55:00-18:58:00 (3') |
| A6 | Crowd building up from low to high: People walk about and negotiate ways to find spare foothold space to gradually build up the crowd - areas close to the edge of the platform tend to be static, whilst other areas movements are more fluid. | 9500 frames 17:30:31-17:36:51 (6'20") |
| A7 | Crowd changing from high to low: Crowded passengers waiting for a train; a train arrives and people get off and on; the train departs with a full load, leaving still passengers behind; a second train comes and goes, still passengers are left on the platform; a third train service arrives, now leaving fewer passengers. | 9500 frames 18:04:20-18:10:40 (6'20") |

**Table 2:** A video collection of crowd scenarios for eastbound Platform B: This platform scene suffers additionally from (somehow global) illumination changes caused by the traffic signal lights switching between red and green as well as the rear (red) lights shed from the departing trains; the lights are also reflected markedly on certain spots of the polished platform surface.

| Video clips | Description of the dynamic scene | # of frames, time and (length) |
|---|---|---|
| B8 | Trains come and go with a low crowd platform: a train calling at the platform and departing; a second train approaching and stopping for a while, then leaving; a third one is approaching | 4500 frames 15:28:00-15:31:05 (3') |
| B9 | Trains come and go with a moderately high crowd platform: passengers waiting on the platform; a train comes and goes while dropping off and picking up commuters | 4500 frames 17:48:24-17:51:13 (3') |
| B10 | The amount of crowd changes between medium and low: Crowd density changes while two train services come and go | 4500 frames 17:16:40-17:19:39 (3') |
| B11 | Varied crowd density: Two trains come and go, crowd changes between medium (gathering) and low (after train departing) | 4500 frames 17:39:00-17:41:36 (3') |

(continued)

| Video clips | Description of the dynamic scene | # of frames, time and (length) |
|---|---|---|
| B12 | Relatively low and non-varying crowd situation: a train calling and departing; this scenario then repeats | 4500 frames 15:31:27-15:34:26 (3') |
| B13 | A crowd gradually builds up over the duration, but with some typical cycling changes of the crowd level with a train arrival and departure | 9500 frames 18:05:40-18:11:54 (6'20") |
| B14 | Crowd density changes from high to low: In the meantime, four train services call at the platform with about 40 seconds gap in between | 9500 frames 18:12:23-18:18:44 (6'20") |

**Table 3:** Thresholds used according to embodiments of the present invention.

| *Tds* | Description | Valid range | Value used | Comments |
|---|---|---|---|---|
| $A_{min}$ $A_{max}$ | MinimumBlobSizeT (MaximumBlobSizeT): It is used to decide on the minimum (maximum) allowed blob size of the ROI partition. | 100-400 ($A_{min}$-2500) | 250 (2000) | A small size blob cannot ensure reliable feature extraction. (A large blob tends to introduce too much decision error in the ensued chain of processing). |
| $\tau_f$ | MotionT: For a given blob, if the ratio of detected foreground pixels is higher than this threshold, it is considered as a foreground blob; though sudden illumination changes can also cause a blob to satisfy this condition, the blob may not be a congestion blob, subject to a second condition check (below) | 0 - 1.0 | 0.3 | The choice of a higher value will reduce the rating of congestion level and a lower one will increase it. The impact on the final result is high (important parameter). The parameter is not very sensitive, for example, any value between 0.2 and 0.4 will only change the results slightly. |
| $\tau_{mv}$ | VarianceMotionT: For a given blob, if the variance of the pixels difference between two adjacent frames is higher than this threshold, then a dynamic congestion blob is confirmed if the first condition (explained above) is already satisfied. | 0 - 1000 | 100 | The choice of a higher value will reduce the rating of congestion level and a lower one will increase it. The impact f this parameter is best felt in circumstance when sudden illumination changes happen (e.g., train headlights and traffic signals). The parameter is not very sensitive. |
| $\tau_{cl}$ | CLT: For a given blob, if the 'city block' distance between the 'colour layout' feature vectors of the current frame and the LTSB model is higher than this value, then the current blob is a candidate static congestion blob, subject to a second condition check (below) | 0 - 314 | 1 | The choice of a higher value will reduce the overall rating of congestion level and a lower one will increase it. The impact is high (important parameter). The parameter is not very sensitive. |

(continued)

| Tds | Description | Valid range | Value used | Comments |
|---|---|---|---|---|
| $\tau_{sv}$ | VarianceStaticT: For a given blob, if the variance of the pixels difference between the current frame and the LTSB model is higher than this threshold, then a static congestion blob is confirmed if the first condition (above) is already satisfied. | 0 - 2000 | 750 | A higher value will reduce the measure of congestion level and a lower one will increase it. The parameter is not very sensitive. |
| $\tau_{lv}$ | LongTermVarianceT: It is used to ascertain if a pixel is non-congested on a longer time scale judging by its variance. If true, it is updated by the mean value of the pixels over this time period (Each colour band is updated separately). | 0 - 200 | 50 | A higher value will possibly allow the pixels with noise. A lower value will block the regular update. |
| $\tau_s$ | PixelDifferenceT: It is used to find out if a change in a pixel has occurred, or if the pixel may be considered 'congested'. It is true, if the maximum difference between the current frame and the LTSB model in all 3 colour bands is higher than this threshold. | 0 - 255 | 50 | This helps to differentiate the scattered crowd situation from fully congested crowd situation. A higher value will reduce the congestion level and a lower value will increase the congestion value. |

**Claims**

1. A method of determining a status of a movable object in a physical space by automated processing of a video sequence of the space, the method comprising:

   - determining a region of interest accommodating a pre-determined path of the object in the space;
   - partitioning the region of interest into an array of sub-regions;
   - determining first spatial-temporal visual features within the region of interest and, for one or more sub-regions, computing a metric based on the said features indicating whether or not a said object is moving in the sub-region;
   - determining second spatial-temporal visual features within the region of interest and, for one or more sub-regions, computing a metric based on the said features indicating whether or not a said object is stationary in the sub-region;
   - generating an overall degree of presence for an object in the region of interest on the basis of both moving and stationary metrics.

2. A method according to claim 1, wherein second spatial-temporal features are determined only for sub-regions that do not have an object moving therein.

3. A method according to either preceding claim, wherein the region of interest is partitioned such that each sub-region in a video image encloses a number of pixels that is sufficient to enable reliable spatial-temporal visual feature extraction.

4. A method according to any one of the preceding claims, wherein partitioning the region of interest includes defining each sub-region so that it has an area within an upper and lower bound.

5. A method according to any one of the preceding claims, wherein the sub-regions have a maximum size of 2500 pixels and a minimum size of 100 pixels.

6. A method according to any one of the preceding claims, wherein the sub-regions have a maximum size of 2000 pixels and a minimum size of 250 pixels.

7. A method according to any one of the preceding claims, including assigning a weighting to each sub-region that is only partially within the region of interest.

8. A method according to any one of the preceding claims, wherein object movement within a sub-region is determined including by identifying first spatial-temporal visual features indicative of greater than a threshold level of activity within a sub-region using a first adaptive background reference model and by comparing a current video image with a previous video image.

9. A method according to claim 8, wherein object movement within a sub-region is determined including by comparing a current image with a previous image in order to characterise any global changes to the current image, and reducing the influence of any identified first spatial-temporal visual features that result from any such global changes in the image.

10. A method according to any one of the preceding claims, wherein a stationary object within a sub-region is determined including by identifying second spatial-temporal visual features indicative of greater than a threshold level of difference between a sub-region of a current video image and the same sub-region of a second adaptive background reference model.

11. A method according to claim 10, wherein a stationary object within a sub-region is determined including by comparing a current image with a second adaptive background reference model in order to characterise any global changes to the current image, and reducing the influence of any identified second spatial-temporal visual features that result from any such global changes in the image.

12. A method according to claim 11 as dependent on claim 9, wherein the first adaptive background reference model is a relatively short term responsive background model and the second adaptive background reference model is a relatively long term stationary background model.

13. A method according to any one of the preceding claims, in which the physical space includes a train platform, the object is a train and the region of interest is a region of video image through which the train travels or rests when entering, waiting and/or leaving the platform.

14. A method according to any one of the preceding claims, including determining crowd congestion in said physical space by:

   - determining a second region of interest in the space;
   - partitioning the second region of interest into an irregular array of sub-regions, each comprising a plurality of pixels of video image data;
   - assigning a congestion contributor to each sub-region in the irregular array of sub-regions;
   - determining first spatial-temporal visual features within the region of interest and, for at least one sub-region, computing a metric based on the said features indicating whether or not the sub-region is dynamically congested;
   - determining second spatial-temporal visual features within the region of interest and, for at least one sub-region, computing a metric based on the said features indicating whether or not the sub-region is statically congested;
   - generating an indication of an overall measure of congestion for the second region of interest on the basis of both dynamically and statically congested sub-regions and their respective congestion contributors.

15. A system determining a degree of presence of a movable object in a physical space by automated processing of a video sequence of the space, the system comprising:

   - an imaging device for generating images of a physical space; and
   - a processor,

wherein, for a given region of interest in images of the space, the processor is arranged to:

   - partition the region of interest into an array of sub-regions;

- determine third spatial-temporal visual features within the region of interest and, for one or more sub-regions, computing a metric based on the said features indicating whether or not a said object is moving in the sub-region;
- determine fourth spatial-temporal visual features within the region of interest and, for one or more sub-regions, computing a metric based on the said features indicating whether or not a said object is stationary in the sub-region;
- generate an overall degree of presence for an object in the region of interest on the basis of both moving and stationary metrics.

# Fig.1.

West-bound platform

105

ADSL link

135

Mobile clients

140

110

115

125

130

100

Live video capture

Intelligent video analytic engine

Web server

IP Network

Configuration & test interface

145

120

Web clients

East-bound platform

EP 2 093 699 A1

# Fig.2.

Compute stationary occupancy — 250

Global scene scatter analysis — 255

'Zero-motion' regions detection and analysis — 245

Non-uniform blob-based partition of ROI — 200

Conduct non-uniform Blob-based partition — 220

Compute pixel density map — 215

Compute homography — 210

Specify ROI — 205

Evaluate meaningful motion — 230

Dynamic congestion detection and assessing — 225

Foreground detection — 235

Temporal differencing — 240

# Fig.3.

305 — Background initialisation & adaption

310 — Foreground masks detection & shadow removal

315 — Blob-based foreground pel occupancy ratio calculation

325 — Adjacent frame differencing

300 — Scene geometry estimation and blob partition of user-defined ROI

320 — Congested blob detection (1)

355 — Scene scatter analysis

330 — Blob-based variance calculation

360 — Congestion-level computing procedure

Yes

no

Yes

335 — Long-term stationary background

345 — Congested blob detection (2)

350 — Blob-based counting number of occurance of congestion

340 — Blob-based background updating

100

EP 2 093 699 A1

## Fig.4(a).

## Fig.4(b).

405

405

400

Fig.5(b).

Ground Plane

Fig.5(a).

Image Plane

## Fig.6(a).

## Fig.6(b).

## Fig.7(a).

## Fig.7(b).

## Fig.8.

- **800** — Select blob starting at $(x,y)$ in ground plane with $w=w_s$ and $h=h_s$
- **805** — Map the blob into image plane $(u,v)$ and calculate blob area $A_{u,v}$
- **810** — $A_{u,v} > A_{min}$ & $A_{u,v} > A_{max}$ ?
- **815** — $f \times w$ or $f \times h$
- **820** — $w=w_l$, $h=h_l$
- **825** — Calculate weight
- **830** — More blobs ?
- **835** — Select next blob $x=x+w_l+1$, $y=y+h_l+1$
- **840** — End

# Fig.9(a).

900

905

# Fig.9(b).

Fig.10(a).

Fig.10(b).

Fig.10(c).

Fig.11(a).

Fig.11(b).

Fig.11(c).

# Fig.12(a).

# Fig.12(b).

## Fig.12(c).

## Fig.12(d).

Fig.13.

Fig.14(a).

Fig.14(b).

region of
interest

## Fig.15(a).

## Fig.15(b).

## Fig.15(c).

## Fig.16(a).

## Fig.16(b).

## Fig.16(c).

# Fig.17.

EP 2 093 699 A1

# Fig.17(cont.)

(A)

(B)

(C)

Fig.18.

Fig.18(cont.).

Legend:
—✳— Dynamic Congestion
—— Static Congestion
—— Train Indicator

X-axis: Frame Number (B)

# Fig.18(cont I.).

(D)

(E)

(F)

# Fig.19.

# Fig.19(cont.).

(J)

(K)

(L)

# Fig.20.

# Fig.20(cont.).

(B)

(C)

(D)

**Europäisches Patentamt**
**European Patent Office**
**Office européen des brevets**

# EUROPEAN SEARCH REPORT

Application Number

EP 08 25 0571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEHCHAN OH; SUNGHUK PARK; CHANGMU LEE: "Vision Based Platform Monitoring System for Railway Station Safety" ITST '07. 7TH INT. CONF. ON ITS, 6 July 2007 (2007-07-06), XP002502767 Retrieved from the Internet: URL:http://ieeexplore.ieee.org/stamp/stamp.jsp?arnumber=4295854&isnumber=4295808> * page 2 * | 1-15 | INV. G06K9/00 |
| A | US 2002/122570 A1 (PARAGIOS NIKOS [US] ET AL) 5 September 2002 (2002-09-05) * paragraphs [0060], [0061] * | 1-15 | |
| X | JP 11 152034 A (FUJITSU GENERAL LTD) 8 June 1999 (1999-06-08) * abstract * | 1-15 | |
| T | AUBERT D ET AL: "Chapter 6.3: Use of Different Time Scale References for Measuring Several Crowd Situations" 20000101, 1 January 2000 (2000-01-01), pages 239-247, XP008093820 * page 241, last paragraph - page 243, paragraph 5; figure 4 * | 1-15 | TECHNICAL FIELDS SEARCHED (IPC) G06K |
| T | BRUYELLE J-L ET AL: "A distributed multi-sensor surveillance system for public transport applications" INTELLIGENT DISTRIBUTED VIDEO SURVEILLANCE SYSTEMS, IEE, 1 January 2006 (2006-01-01), pages 185-224, XP008094451 ISBN: 978-0-86341-504-3 * page 213, paragraph 1 - page 214, paragraph 3; figure 7.34 * | 1-15 | |

-/--

The present search report has been drawn up for all claims

| Place of search | Date of completion of the search | Examiner |
|---|---|---|
| The Hague | 6 November 2008 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 08 25 0571

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2008/046662 A (SCHUETTE JOERG [DE]; SCHOLZ SVEN [DE]) 24 April 2008 (2008-04-24) * page 10, paragraph 3; figure 6 * * page 11, paragraph 3 - page 12, paragraph 2 * * page 12, last paragraph - page 13, paragraph 2 * * page 16, paragraph 1 - page 17, paragraph 3; figure 16 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 6 November 2008 | Granger, Bruno |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 08 25 0571

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2008

| Patent document cited in search report | | Publication date | Patent family member(s) | | Publication date |
|---|---|---|---|---|---|
| US 2002122570 | A1 | 05-09-2002 | US | 2007031005 A1 | 08-02-2007 |
| JP 11152034 | A | 08-06-1999 | NONE | | |
| WO 2008046662 | A | 24-04-2008 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Dong Kong ; Doug Gary ; Hai Tao.** Counting pedestrians in crowds using viewpoint invariant training. *Proc. of British Machine Vision Conference,* 2005
- Real-time outdoor video surveillance with robust foreground extraction and object tracking via multi-state transition management. **Bangjun Lei ; Li-Qun Xu.** Journal, Pattern Recognition Letters. Elsevier Publisher, April 2006, vol. 27, 1816-1825
- **Fenjun Lv ; Tao Zhao ; Ramakant Nevatia.** Camera calibration from video of a walking human. *IEEE Trans. on PAMI,* 2006, vol. 28 (9
- Segmentation and tracking of multiple moving objects for intelligent video analysis. **Li-Qun Xu ; Jose-Luis Landabaso ; Bangjun Lei.** BT Technology Journal, Special Issue on Intelligent Space. Kluwer Academic Publishers, July 2004, vol. 22